# EUROPEAN PATENT APPLICATION

(11) **EP 4 415 135 A1**
(43) Date of publication of application: **14.08.2024**
(21) Application number: 22878601.8
(22) Date of filing: 06.10.2022
(51) Int. Cl.: H01M 50/197, B65D 65/40, H01M 10/04, H01M 50/105, H01M 50/121, H01M 50/129, H01M 50/184, H01M 50/193, H01M 50/198, H01M 50/342, H01M 50/375

(54) **ADHESIVE FILM, ADHESIVE FILM MANUFACTURING METHOD, POWER STORAGE DEVICE, AND POWER STORAGE DEVICE MANUFACTURING METHOD**

(30) Priority: 06.10.2021 JP 2021165120
(71) Applicant: Dai Nippon Printing Co., Ltd., Tokyo 162-8001 (JP)
(72) Inventor: SASAKI, Miho, Tokyo 162-8001 (JP)
(74) Representative: Müller-Boré & Partner Patentanwälte PartG mbB
(86) International application number: PCT/JP2022/037521
(87) International publication number: WO 2023/058734

(57) **Abstract**

Provided is an adhesive film for use in a power storage device, wherein: the power storage device has a structure in which a power storage device element is accommodated in a package body formed of a power storage device exterior material; the power storage device exterior material is composed of a laminate including, in order from the outside, at least a base layer, a barrier layer, and thermally fusible resin layers; the power storage device element is accommodated in the package body by thermally fusing together the thermally fusible resin layers of the power storage device exterior material; the adhesive film is used so as to be interposed between the thermally fusible resin layers, at a position where the thermally fusible resin layers are thermally fused; the adhesive film includes at least a resin layer A and an adhesive layer P; the melting peak temperature of the resin layer A is at least 135°C; and the melting peak temperature of the adhesive layer P is no more than 100°C.

## Description

### TECHNICAL FIELD

The present disclosure relates to an adhesive film, a method for manufacturing an adhesive film, an electrical storage device, and a method for manufacturing an electrical storage device.

### BACKGROUND ART

Various types of electrical storage devices have been developed heretofore, and in every electrical storage device, an exterior material for electrical storage devices is an essential member for sealing electrical storage device elements such as an electrode and an electrolyte. Metallic exterior materials for electrical storage devices have been often used heretofore as exterior materials for electrical storage devices, and in recent years, electrical storage devices have been required to be diversified in shape, and desired to be thinner and lighter as performance of, for example, electric cars, hybrid electric cars, personal computers, cameras and mobile phones has been enhanced. However, metallic exterior materials for electrical storage devices that have often been heretofore used have the disadvantage that it is difficult to keep up with diversification in shape, and there is a limit on weight reduction.

Thus, in recent years, a laminated sheet with a base material layer, an adhesive layer, a barrier layer, and a heat-sealable resin layer laminated in the stated order has been proposed as an exterior material for electrical storage devices which is easily processed into diversified shapes and is capable of achieving thickness reduction and weight reduction. When such a laminated film-shaped exterior material for electrical storage devices is used, an electrical storage device element is sealed with the exterior material for electrical storage devices by heat-sealing the peripheral edge portion of the exterior material for electrical storage devices while the heat-sealable resin layers located at the innermost layer of the exterior material for electrical storage devices are opposed to each other.

### PRIOR ART DOCUMENT

### PATENT DOCUMENTS

Patent Document 1: Japanese Patent Laid-open Publication No. 2015-79638
Patent Document 2: Japanese Patent Laid-open Publication No. 2002-8616

### SUMMARY OF THE INVENTION

### PROBLEMS TO BE SOLVED BY THE INVENTION

For example, in recent years, with high-speed and large-capacity data communication by smartphones, the amount of electricity consumed has increased, and an attempt has been made to increase the capacity of electrical storage devices. However, increasing the capacity of a battery involves an increase in container size and an increase in amount of reactive substances, and also leads to an increase in amount of gas generated if thermal runaway of an electrical storage device occurs (i.e., the temperature of the electrical storage device increases), thus raising the risk of explosion caused by an increase in internal pressure of the electrical storage device. In an electrical storage device (for example, a metal can battery) with a metallic exterior material, a safety valve is attached to secure safety at the time of generation of gas (see Patent Document 2).

However, in an electrical storage device with a laminated film-shaped exterior material, it is difficult to attach such a safety valve, and avoiding expansion of the electrical storage device which is caused by gas generated inside the electrical storage device having reached a high temperature is a challenge.

Under these circumstances, a main object of the present disclosure is to provide an adhesive film that is interposed between heat-sealable resin layers in a heat-sealing portion of an exterior material of an electrical storage device, the adhesive film being capable of sealing the electrical storage device until the electrical storage device reaches a high temperature (for example, 100°C to 130°C, preferably 110°C to 130°C, particularly preferably 120°C to 130°C), and unsealing the electrical storage device at the location of the adhesive film to release gas generated inside the electrical storage device to the outside when the electrical storage device reaches the high temperature (for example, 100°C to 130°C, preferably 110°C to 130°C, particularly preferably 120°C to 130°C). Further, an object of the present disclosure is to provide method for manufacturing the adhesive film, an electrical storage device utilizing the adhesive film, and a method for manufacturing the electrical storage device.

### MEANS FOR SOLVING THE PROBLEM

The inventors of the present disclosure have extensively conducted studies for solving the above-described problems. As a result, the inventors have found that when in a heat-sealing portion of an exterior material for electrical storage devices, an adhesive film including a resin layer A and an adhesive layer P each having a predetermined melting peak temperature is interposed between heat-sealable resin layers of the exterior material for electrical storage devices, it is possible to seal an electrical storage device until the electrical storage device reaches a high temperature (for example, 100°C to 130°C, preferably 110°C to 130°C, particularly preferably 120°C to 130°C), and to unseal the electrical storage device at the location of the adhesive film (specifically, the location of the adhesive layer having a melting peak temperature of 100°C or lower) to release gas generated inside the electrical storage device to the outside when the electrical storage device reaches the high temperature (for example, 100°C to 130°C, preferably 110°C to 130°C, particularly preferably 120°C to 130°C). The present disclosure is an invention that has been completed by further conducting studies based on the above-mentioned findings.

That is, the present disclosure provides an invention of an aspect as described below.

An adhesive film that is used for an electrical storage device,
the electrical storage device having a structure in which an electrical storage device element is housed in a packaging formed of an exterior material for electrical storage devices,
the exterior material for electrical storage devices including a laminate including at least a base material layer, a barrier layer, and a heat-sealable resin layer in the stated order from the outside,
the electrical storage device element being housed in the packaging by heat-sealing the heat-sealable resin layers of the exterior material for electrical storage devices,
the adhesive film being used by being interposed between the heat-sealable resin layers at a location where the heat-sealable resin layers are heat-sealed,
the adhesive film including at least a resin layer A and an adhesive layer P,
the resin layer A having a melting peak temperature of 135°C or higher,
the adhesive layer P having a melting peak temperature of 100°C or lower.

### ADVANTAGES OF THE INVENTION

According to the present disclosure, it is possible to provide an adhesive film that is interposed between heat-sealable resin layers in a heat-sealing portion of an exterior material of an electrical storage device, the adhesive film being capable of sealing the electrical storage device until the electrical storage device reaches a high temperature (for example, 100°C to 130°C, preferably 110°C to 130°C, particularly preferably 120°C to 130°C), and unsealing the electrical storage device at the location of the adhesive film to release gas generated inside the electrical storage device to the outside when the electrical storage device reaches the high temperature (for example, 100°C to 130°C, preferably 110°C to 130°C, particularly preferably 120°C to 130°C). According to the present disclosure, it is also possible to provide method for manufacturing the adhesive film, an electrical storage device utilizing the adhesive film, and a method for manufacturing the electrical storage device.

### BRIEF DESCRIPTION OF THE DRAWINGS

Fig. 1 is a schematic plan view of an electrical storage device of the present disclosure.
Fig. 2 is a schematic sectional view taken along line A-A' in Fig. 1.
Fig. 3 is a schematic sectional view of an adhesive film of the present disclosure.
Fig. 4 is a schematic sectional view of an adhesive film of the present disclosure.
Fig. 5 is a schematic sectional view of an exterior material for electrical storage devices according to the present disclosure.

### EMBODIMENTS OF THE INVENTION

The adhesive film of the present disclosure is an adhesive film that is used for an electrical storage device, the electrical storage device having a structure in which an electrical storage device element is housed in a packaging formed of an exterior material for electrical storage devices, the exterior material for electrical storage devices including a laminate including at least a base material layer, a barrier layer, and a heat-sealable resin layer in the stated order from the outside, the electrical storage device element being housed in the packaging by heat-sealing the heat-sealable resin layers of the exterior material for electrical storage devices, the adhesive film being used by being interposed between the heat-sealable resin layers at a location where the heat-sealable resin layers are heat-sealed, the adhesive film including at least a resin layer A and an adhesive layer P, the resin layer A having a melting peak temperature of 135°C or higher, the adhesive layer P having a melting peak temperature of 100°C or lower.

Since the adhesive film of the present disclosure has the above-mentioned characteristics, the adhesive film, when interposed between heat-sealable resin layers in a heat-sealing portion of an exterior material of an electrical storage device, is capable of sealing the electrical storage device until the electrical storage device reaches a high temperature (for example, 100°C to 130°C, preferably 110°C to 130°C, particularly preferably 120°C to 130°C), and unsealing the electrical storage device at the location of the adhesive film to release gas generated inside the electrical storage device to the outside when the electrical storage device reaches the high temperature (for example, 100°C to 130°C, preferably 110°C to 130°C, particularly preferably 120°C to 130°C).

The electrical storage device of the present disclosure is an electrical storage device having a structure in which an electrical storage device element is housed in a packaging formed of an exterior material for electrical storage devices, the exterior material for electrical storage devices including a laminate including at least a base material layer, a barrier layer, and a heat-sealable resin layer in the stated order from the outside, the electrical storage device element being housed in the packaging by heat-sealing the heat-sealable resin layers of the exterior material for electrical storage devices, the adhesive film being disposed so as to be interposed between the heat-sealable resin layers at a location where the heat-sealable resin layers are heat-sealed, the adhesive film including at least a resin layer A and an adhesive layer P, the resin layer A having a melting peak temperature of 135°C or higher, the adhesive layer P having a melting peak temperature of 100°C or lower.

That is, the adhesive film of the present disclosure is used in the electrical storage device of the present disclosure, and is capable of sealing the electrical storage device until the electrical storage device reaches a high temperature (for example, 100°C to 130°C, preferably 110°C to 130°C, particularly preferably 120°C to 130°C), and unsealing the electrical storage device at the location of the adhesive film to release gas generated inside the electrical storage device to the outside when the electrical storage device reaches the high temperature (for example, 100°C to 130°C, preferably 110°C to 130°C, particularly preferably 120°C to 130°C).

Hereinafter, the adhesive film, the method for manufacturing the adhesive film, the electrical storage device and the method for manufacturing the electrical storage device according to the present disclosure will be described in detail.

For the numerical range in this specification, a numerical range indicated by the term "A to B" means "A or more" and "B or less". For example, the expression of "2 to 15 mm" means 2 mm or more and 15 mm or less.

### 1. Adhesive film

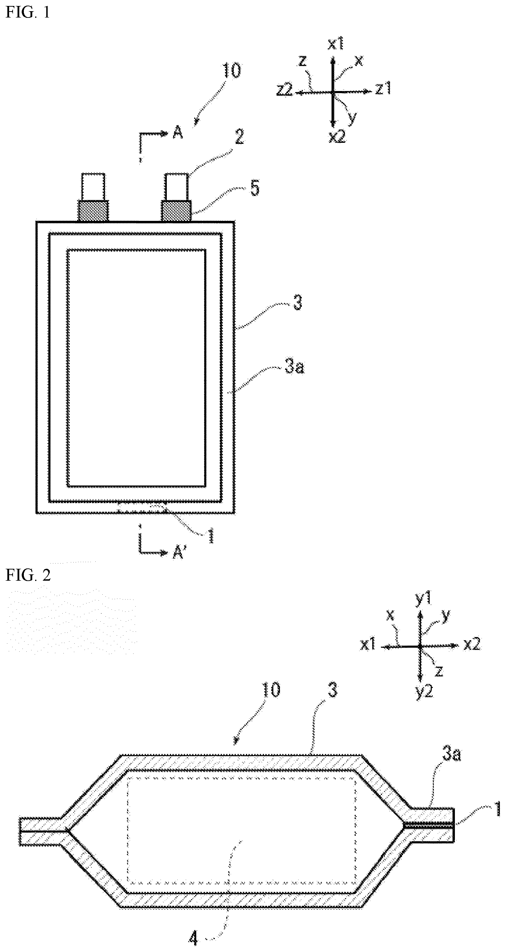

The adhesive film of the present disclosure is an adhesive film used for an electrical storage device. The adhesive film of the present disclosure is used by being interposed between the heat-sealable resin layers at a location where the heat-sealable resin layers of the exterior material for electrical storage devices are heat-sealed. As shown in, for example, Figs. 1 and 2, an adhesive film 1 of the present disclosure is interposed between heat-sealable resin layers facing each other at the location of a peripheral edge portion 3a of an exterior material 3 for electrical storage devices where the heat-sealable resin layers are heat-sealed for sealing an electrical storage device element 4 in an electrical storage device 10 of the present disclosure. The adhesive film and the heat-sealable resin layer on each of both sides thereof are heat-sealed in sealing of the electrical storage device element 4 with the exterior material 3 for electrical storage devices. That is, both surfaces of the adhesive film can be each heat-sealed to the heat-sealable resin layer.

The adhesive film 1 of the present disclosure is capable of sealing the electrical storage device until the electrical storage device 10 reaches a high temperature (for example, 100°C to 130°C, preferably 110°C to 130°C, particularly preferably 120°C to 130°C), and unsealing the electrical storage device 10 at the location of the adhesive film between the heat-sealable resin layers to release gas generated inside the electrical storage device to the outside when the electrical storage device reaches the high temperature (for example, 100°C to 130°C, preferably 110°C to 130°C, particularly preferably 120°C to 130°C). By disposing the adhesive film 1 at a part of the location where the heat-sealable resin layers of the exterior material for electrical storage devices are heat-sealed, gas can be selectively discharged to the outside from the specific location where the adhesive film 1 is disposed. That is, the location where gas is discharged can be set at any location in the hear-sealing portion between the heat-sealable resin layers.

The location where the adhesive film of the present disclosure is disposed is not particularly limited as long as it is a location where the heat-sealable resin layers of the exterior material for electrical storage devices are heat-sealed. For example, when the electrical storage device has an oblong shape in plan view, the adhesive film may be disposed on either the long side or the short side of the peripheral edge portion 3a of the heat-sealed exterior material 3 for electrical storage devices. The adhesive film of the present disclosure may be disposed at one, or two or more, of locations where the heat-sealable resin layers of the exterior material for electrical storage devices are heat-sealed.

The size of the adhesive film is not particularly limited as long as gas is appropriately discharged at the time of unsealing. For example, when as shown in Fig. 1, the electrical storage device has a rectangular shape in plan view, and the adhesive film is disposed along one side of the rectangular shape (in the example of Fig. 1, the adhesive film is disposed along the z direction), the ratio of the length of the adhesive film to the length of the side may be about 3 to 98%. The size of the adhesive film in the width direction (a direction perpendicular to the length direction and the thickness direction; or a direction along the x direction in the example of Fig. 1) may be about 5 to 30% with respect to the length of the heat-sealed area, which is defined as 100%.

In the electrical storage device 10, a metal terminal 2 is electrically connected to the electrical storage device element 4, and protrudes to the outside of the exterior material 3 for electrical storage devices. It is preferable that the adhesive film of the present disclosure is not located between the metal terminal 2 and the exterior material 3 for electrical storage devices (heat-sealable resin layer). Further, it is preferable that the adhesive film 1 of the present disclosure is not in contact with the metal terminal 2.

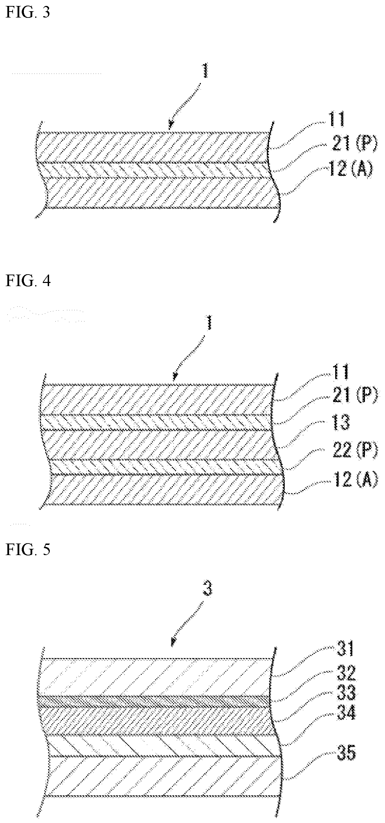

As shown in Figs. 3 and 4, the adhesive film 1 of the present disclosure has a multi-layered structure. Specifically, the adhesive film 1 of the present disclosure includes at least the resin layer A and the adhesive layer P. In the present disclosure, the resin layer A has a melting peak temperature of 135°C or higher. The adhesive layer P has a melting peak temperature of 100°C or lower.

The resin layer A may form an outermost layer or an inner layer of the adhesive film 1. On the other hand, it is preferable that the adhesive layer P forms an inner layer (that is, a layer other than an outermost layer) of the adhesive film 1. The resin layer A in the adhesive film 1 may be a single layer, or may have two or more layers. The adhesive layer P in the adhesive film 1 may be a single layer, or may have two or more layers.

For example, as shown in Fig. 3, the adhesive film 1 of the present disclosure may have a configuration in which a first polyolefin layer 11, a first adhesive layer 21 and a second polyolefin layer 12 are laminated in the stated order (three-layered configuration). In Fig. 3, the second polyolefin layer 12 forms the resin layer A, and the first adhesive layer 21 forms the adhesive layer P.

For example, as shown in Fig. 4, the adhesive film 1 of the present disclosure has a configuration in which a first polyolefin layer 11, a first adhesive layer 21, an intermediate layer 13, a second adhesive layer 22 and a second polyolefin layer 12 are laminated in the stated order (five-layered configuration). In Fig. 4, the intermediate layer 13 forms the resin layer A, and the first adhesive layer 21 and the second adhesive layer each form the adhesive layer P.

In the present disclosure, it is preferable that the outermost layer of the adhesive film 1 contains a polyolefin backbone because of excellent adhesion to the heat-sealable resin layer of the exterior material for electrical storage devices.

The resin contained in the resin layer A is only required to have a melting peak temperature of 135°C or higher, and is not particularly limited, and examples thereof include polyethylene terephthalate, polyethylene naphthalate, polybutylene terephthalate, polyacetal, acrylic resins, homo- or block-type polypropylene, cyclic polyolefins, polymethylpentene and copolymers thereof with α-olefins, nylon 6, nylon 66, polyvinylidene chloride, polyphenylene sulfide, acetyl cellulose, fluorine-based resins such as ETFE, PCTFE, PFA and FEP, and resins obtained by modifying any of the foregoing resins with maleic anhydride or acrylic acid. It is preferable that a polyolefin backbone is contained from the viewpoint of being excellent in adhesion to the heat-sealable resin layer of the exterior material for electrical storage devices.

The adhesive for forming the adhesive layer P is only required to have a melting peak temperature of 100°C or lower in terms of the adhesive layer P after curing, and examples thereof include polyester polyol, a polyether polyol, acrylic polyol, and examples thereof include polyurethane adhesives obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound.

Hereinafter, the adhesive film 1 of the present disclosure will be described in detail by taking as an example a case where the adhesive film 1 of the present disclosure has a laminated configuration in which at least the first polyolefin layer 11, the first adhesive layer 21 and the second polyolefin layer 12 are laminated in the stated order.

The first polyolefin layer 11 and the second polyolefin layer 12 each contain a polyolefin-based resin. Examples of the polyolefin-based resin include polyolefins and acid-modified polyolefins. It is preferable that the first polyolefin layer 11 contains an acid-modified polyolefin, among polyolefin-based resins, and it is more preferable that the first polyolefin layer 11 is a layer formed of an acid-modified polyolefin. It is preferable that the second polyolefin layer 12 contains a polyolefin or an acid-modified polyolefin, more preferably a polyolefin, among polyolefin-based resins, and it is still more preferable that the second polyolefin layer 12 is a layer formed of a polyolefin.

For example, the intermediate layer 13 can be provided between the first polyolefin layer 11 and the second polyolefin layer 12. It is preferable that the intermediate layer 13 contains a polyolefin-based resin (the intermediate layer 13 has a polyolefin backbone), more preferably a polyolefin, and it is still more preferable that the intermediate layer 13 is formed of a polyolefin.

The first adhesive layer 21 is preferably a cured product of a resin composition containing an acid-modified polyolefin and a curing agent. The second adhesive layer 22 can be provided between the intermediate layer 13 and the second polyolefin layer 12. The second adhesive layer 22 is preferably a cured product of a resin composition containing an acid-modified polyolefin and a curing agent.

In each of the first polyolefin layer 11, the second polyolefin layer 12, the first adhesive layer 21, the second adhesive layer 22 and the intermediate layer 13, the polyolefin-based resin is preferably a polypropylene-based resin. The polyolefin is preferably polypropylene, and the acid-modified polyolefin is preferably acid-modified polypropylene. The polyolefin-based resin such as a polyolefin and an acid-modified polyolefin may contain known additives, fillers described later, pigments, and the like.

Specific examples of the preferred laminated configuration of the adhesive film 1 of the present disclosure include the following laminated configurations. In the following laminated configuration, it is preferable that the intermediate layer forms the resin layer A if the intermediate layer is present, and at least one of the first polyolefin layer and the second polyolefin layer forms the resin layer A if the intermediate layer is not present.

A three-layered configuration in which a first polyolefin layer formed of acid-modified polypropylene, a first adhesive layer formed of a cured product of a resin composition containing acid-modified polypropylene and a curing agent, and a second polyolefin layer formed of acid-modified polypropylene are laminated in the stated order (laminated configuration 1).

A three-layered configuration in which a first polyolefin layer formed of acid-modified polypropylene, a first adhesive layer formed of a cured product of a resin composition containing acid-modified polypropylene and a curing agent, and a second polyolefin layer formed of polypropylene are laminated in the stated order (laminated configuration 2).

A four-layered configuration in which a first polyolefin layer formed of acid-modified polypropylene, an intermediate layer formed of polypropylene, a second adhesive layer formed of a cured product of a resin composition containing acid-modified polypropylene and a curing agent, and a second polyolefin layer formed of acid-modified polypropylene are laminated in the stated order (laminated configuration 3).

A four-layered configuration in which a first polyolefin layer formed of acid-modified polypropylene, an intermediate layer formed of polypropylene, a second adhesive layer formed of a cured product of a resin composition containing acid-modified polypropylene and a curing agent, and a second polyolefin layer formed of polypropylene are laminated in the stated order (laminated configuration 4).

A five-layered configuration in which a first polyolefin layer formed of acid-modified polypropylene, a first adhesive layer formed of a cured product of a resin composition containing acid-modified polypropylene and a curing agent, an intermediate layer formed of polypropylene, a second adhesive layer formed of a cured product of a resin composition containing acid-modified polypropylene and a curing agent, and a second polyolefin layer formed of acid-modified polypropylene are laminated in the stated order (laminated configuration 5).

A five-layered configuration in which a first polyolefin layer formed of acid-modified polypropylene, a first adhesive layer formed of a cured product of a resin composition containing acid-modified polypropylene and a curing agent, an intermediate layer formed of polypropylene, a second adhesive layer formed of a cured product of a resin composition containing acid-modified polypropylene and a curing agent, and a second polyolefin layer formed of polypropylene are laminated in the stated order (laminated configuration 6).

Among these laminated configurations, laminated configurations 5 and 6 are particularly preferable from the viewpoint of more suitably exhibiting the effect of the invention of the present disclosure.

Materials forming the first polyolefin layer 11, the second polyolefin layer 12, the first adhesive layer 21, the second adhesive layer 22 and the intermediate layer 13 will be described later in detail.

In the adhesive film 1 of the present disclosure, the melting peak temperature of the resin layer A is 135°C or higher, and the melting peak temperature of at least one of the adhesive layers P is 100°C or lower. That is, the melting peak temperature of the first adhesive layer 21 is 100°C or lower when the adhesive film 1 of the present disclosure includes only the first adhesive layer 21, the melting peak temperature of the second adhesive layer 22 is 100°C or lower when the adhesive film 1 includes only the second adhesive layer 22, and the melting peak temperature of at least one of the first adhesive layer 21 and the second adhesive layer 22 is 100°C or lower when the adhesive film 1 includes both the first adhesive layer 21 and the second adhesive layer 22. From the viewpoint of exhibiting the effect of the invention of the present disclosure, the melting peak temperature of at least one of the first adhesive layer 21 and the second adhesive layer 22 in the adhesive film of the present invention is 100°C or lower, so that the electrical storage device can be unsealed from the first adhesive layer 21 or second adhesive layer 22 having a melting peak temperature of 100°C or lower. Note that if the melting peak temperature of the resin layer A is lower than 135°C, it is difficult to unseal the electrical storage device at the location of the adhesive film when the electrical storage device reaches a high temperature even though at least one of the first adhesive layer 21 and the second adhesive layer 22 has a melting peak temperature of 100°C or lower. In the present disclosure, a method for measuring the melting peak temperature is as follows.

### <Measurement of melting peak temperature>

For each layer for forming the adhesive film, the melting peak temperature is measured in accordance with the provisions of JIS K 7121: 2012 (Testing Methods for Transition Temperatures of Plastics (Amendment 1 of JIS K 7121: 1987)). The measurement is performed using a differential scanning calorimeter. The measurement sample is held at -50°C for 15 minutes, then heated from -50°C to 210°C at a temperature rise rate of 10°C/min to measure the first melting peak temperature P (°C), and then held at 210°C for 10 minutes. Next, the measurement sample is cooled from 210°C to -50°C at a temperature lowering rate of 10°C/min, and held for 15 minutes. Further, the second melting peak temperature Q (°C) is measured by heating the measurement sample from -50°C to 210°C at a temperature rise rate of 10°C/min. The flow rate of the nitrogen gas is set to 50 ml/min. In accordance with the above procedure, the first measured melting peak temperature P (°C) and the second measured melting peak temperature Q (°C) are determined, and the first measured melting peak temperature P is adopted as a melting peak temperature. Note that when the measurement sample has a high melting peak temperature, the melting peak temperature may be measured by heating the sample from -50°C to 500°C at the same temperature rise rate.

From the viewpoint of more suitably exhibiting the effect of the present disclosure, the melting peak temperature of the resin layer A is preferably about 150°C or higher, more preferably about 155°C or higher, still more preferably about 160°C or higher, still more preferably about 163°C or higher. From the same viewpoint, the melting peak temperature of the resin layer A is preferably about 180°C or lower, more preferably about 175°C or lower, still more preferably about 170°C or lower. The melting peak temperature is preferably in the range of about 135 to 180°C, about 135 to 175°C, about 135 to 170°C, about 150 to 180°C, about 150 to 175°C, about 150 to 170°C, about 155 to 180°C, about 155 to 175°C, about 155 to 170°C, about 160 to 180°C, about 160 to 175°C, about 160 to 170°C, about 163 to 180°C, about 163 to 175°C, or about 163 to 170°C.

From the viewpoint of more suitably exhibiting the effect of the present disclosure, the melting peak temperature of the adhesive layer P is preferably about 99°C or lower, more preferably about 97°C or lower. From the same viewpoint, the melting peak temperature is preferably about 80°C or higher, more preferably about 83°C or higher, still more preferably about 85°C or higher. The melting peak temperature is preferably in the range of about 80 to 100°C, about 80 to 99°C, about 80 to 97°C, about 83 to 100°C, about 83 to 99°C, about 83 to 97°C, about 85 to 100°C, about 85 to 99°C, or about 85 to 97°C. As described above, one of the first adhesive layer 21 and the second adhesive layer 22 may have a melting peak temperature of higher than 100°C and 130°C or lower as long as at least one of the first adhesive layer 21 and the second adhesive layer 22 has a melting peak temperature of 100°C or lower.

From the viewpoint of more suitably exhibiting the effect of the present disclosure, the melting peak temperature of the first polyolefin layer 11 is preferably about 110°C or higher, more preferably about 115°C or higher, still more preferably 120°C or higher. From the same point of view, the melting peak temperature is preferably about 160°C or lower, more preferably about 150°C or lower. The melting peak temperature is preferably in the range of about 110 to 160°C, about 110 to 150°C, about 115 to 160°C, about 115 to 150°C, about 120 to 160°C, or about 120 to 150°C. When the melting peak temperature of the first polyolefin layer 11 is 135°C or higher, the first polyolefin layer 11 forms the resin layer A.

From the viewpoint of more suitably exhibiting the effect of the present disclosure, the melting peak temperature of the second polyolefin layer 12 is preferably about 110°C or higher, more preferably about 115°C or higher, still more preferably 120°C or higher. From the same point of view, the melting peak temperature is preferably about 160°C or lower, more preferably about 150°C or lower. The melting peak temperature is preferably in the range of about 110 to 160°C, about 110 to 150°C, about 115 to 160°C, about 115 to 150°C, about 120 to 160°C, or about 120 to 150°C. When the melting peak temperature of the second polyolefin layer 12 is 135°C or higher, the first polyolefin layer 11 forms the resin layer A.

The absolute value of a difference between the melting peak temperature of the heat-sealable resin layer 35 of the exterior material 3 for electrical storage devices for which the adhesive film 1 is used and the melting peak temperature of an outermost layer of the adhesive film 1 (for example, at least one of the first polyolefin layer 11 and the second polyolefin layer 12) is preferably about 0 to 5°C, or about 0 to 3°C. When the absolute value of a difference between the melting peak temperatures decreases (that is, the absolute value of a difference becomes closer to 0°C), the heat-sealable resin layer 35 of the exterior material 3 for electrical storage devices and the first polyolefin layer 11 or the second polyolefin layer 12 are both melted in heat-sealing to the exterior material for electrical storage devices with the adhesive film, so that it becomes easier to enhance adhesion to the heat-sealable resin layer 35.

From the viewpoint of more suitably exhibiting the effect of the present disclosure, the cross-sectional hardness of the resin layer A in at an environmental temperature of 110°C is preferably about 15 N/mm² or more, more preferably about 20 N/mm² or more, still more preferably about 25 N/mm² or more, still more preferably about 30 N/mm² or more. From the same viewpoint, the cross-sectional hardness is preferably about 60 N/mm² or less, more preferably about 50 N/mm² or less, still more preferably about 45 N/mm² or less. The cross-sectional hardness is preferably in the range of about 15 to 60 N/mm², about 15 to 50 N/mm², about 15 to 45 N/mm², about 20 to 60 N/mm², about 20 to 50 N/mm², about 20 to 45 N/mm², about 25 to 60 N/mm², about 25 to 50 N/mm², about 25 to 45 N/mm², about 30 to 60 N/mm², about 30 to 50 N/mm², or about 30 to 45 N/mm². For setting the cross-sectional hardness of the resin layer A at an environmental temperature of 110°C to about 15 N/mm² or more, the resin used for forming the resin layer A is preferably homopolypropylene or block polypropylene in the case of a polyolefin-based resin, and preferably polyethylene terephthalate or polyethylene naphthalate in the case of a polyester-based resin, and it is also preferable to use engineering plastic. The molecular weight, crystallinity, and density of the resin are preferably large. The method for measuring the cross-sectional hardness of the resin layer A at 110°C is as follows.

### <Measurement of cross-sectional hardness>

The martens hardness is adopted as the cross-sectional hardness. An adhesive film is cut into a size of 1.5 cm × 5 mm, embedded in a heat-resistant thermosetting epoxy resin, and polished together with the epoxy resin to expose a cross section, thereby obtaining a measurement sample. Next, a heating stage is installed on an ultra-microhardness tester equipped with a Vickers indenter, and the cross-section sample is set on the stage, and heated for 5 minutes until the sample reaches 110°C. Next, against the center of a layer of the measurement sample at which the cross-sectional hardness is measured, the indenter is pressed to a depth of 1 µm at a pressing rate of 0.1 µm/s to measure the cross-sectional hardness of each layer. The measurement is performed 10 times, and an average value thereof is adopted as a measured value.

From the viewpoint of suitably exhibiting the effect of the present disclosure, the total thickness of the adhesive film 1 is, for example, about 20 µm or more, preferably about 30 µm or more, more preferably about 50 µm or more. In addition, the total thickness of the adhesive film 1 of the present disclosure is preferably about 500 µm or less, more preferably about 300 µm or less, still more preferably about 200 µm or less. The total thickness of the adhesive film 1 of the present disclosure is preferably in the range of about 20 to 500 µm, about 20 to 300 µm, about 20 to 200 µm, about 30 to 500 µm, about 30 to 300 µm, about 30 to 200 µm, about 50 to 500 µm, about 50 to 300 µm, or about 50 to 200 µm.

From the viewpoint of more suitably exhibiting the effect of the present disclosure, the total ratio of the resin layer A to the total thickness (100%) of the adhesive film 1 is, for example, about 5% or more, preferably about 10% or more, and more preferably about 20% or more, and is, for example, about 95% or less, preferably about 90% or less, and more preferably about 85% or less, and a preferable range is about 10 to 90%. The thickness of the resin layer L is preferably about 5 µm or more, more preferably about 10 µm or more, still more preferably about 15 µm or more, and preferably about 200 µm or less, more preferably about 100 µm or less, still more preferably 50 µm or less, still more preferably 40 µm or less, and is preferably in the range of about 10 to 200 µm, about 10 to 100 µm, about 10 to 50 µm, about 10 to 40 µm, about 15 to 200 µm, about 15 to 100 µm, about 15 to 50 µm, about 15 to 40 µm, about 20 to 200 µm, about 20 to 100 µm, about 20 to 50 µm, or about 20 to 40 µm.

From the viewpoint of more suitably exhibiting the effect of the present disclosure, the total ratio of the adhesive layer P to the total thickness (100%) of the adhesive film 1 is, for example, about 0.5% or more, preferably about 1% or more, more preferably about 1.5% or more, and, for example, about 95% or less, preferably about 60% or less, more preferably about 30% or less, and is preferably in the range of about 0.5 to 95%, about 0.5 to 60%, about 0.5 to 30%, about 1 to 95%, about 1 to 60%, about 1 to 30%, about 1.5 to 95%, about 1.5 to 60%, or about 1.5 to 30%. The thickness of the adhesive layer P is preferably about 0.1 µm or more, more preferably about 1 µm or more, still more preferably about 2 µm or more, and preferably about 5 µm or less, more preferably about 3 µm or less, and is preferably in the range of about 0.1 to 5 µm, about 0.1 to 3 µm, about 1 to 5 µm, about 1 to 3 µm, about 2 to 5 µm, or about 2 to 3 µm.

It is preferable that the adhesive film 1 of the present disclosure has fine irregularities on at least one surface of the outermost layer. This enables further improvement of adhesion to the heat-sealable resin layer 35 of the exterior material 3 for electrical storage devices. Examples of the method for forming fine irregularities on the surface of an outermost layer of the adhesive film 1 include a method in which an additive such as fine particles is added to the outermost layer; and a method in which a cooling roll having irregularities on a surface thereof is abutted against a surface of the heat-sealable resin layer to give a shape. The fine irregularities are preferably those in which the ten-point average roughness of the surface of the outermost layer is preferably about 0.1 µm or more, more preferably about 0.2 µm or more, and preferably about 35 µm or less, more preferably about 10 µm or less, and is preferably in the range of about 0.1 to 35 µm, about 0.1 to 10 µm, about 0.2 to 35 µm, about 0.2 to 35 µm, or about 0.2 to 10 µm. The ten-point average roughness is a value obtained by performing measurement under conditions of an objective lens magnification of 50 and no cutoff using Laser Microscope VK-9710 manufactured by KEYENCE CORPORATION in a method conforming to JIS B0601: 1994.

Hereinafter, the materials for forming the first polyolefin layer 11, the second polyolefin layer 12, the first adhesive layer 21, the second adhesive layer 22 and the intermediate layer 13, and the thicknesses thereof will be described in detail.

### [First polyolefin layer 11 and second polyolefin layer 12]

The adhesive film 1 of the present disclosure which is shown in Fig. 3 includes the first polyolefin layer 11 and the second polyolefin layer 12 as outermost layers, and the first polyolefin layer 11 and the second polyolefin layer 12 are bonded to each other with the first adhesive layer 21. The adhesive film 1 of the present disclosure which is shown in Fig. 4 includes the first polyolefin layer 11 and the second polyolefin layer 12 as outermost layers, where the first polyolefin layer 11 is provided on one side of the intermediate layer 13, and the second polyolefin layer 12 is provided on the other side of the intermediate layer 13. In these adhesive films 1 of the present disclosure, the first polyolefin layer 11 and the second polyolefin layer 12 are located, respectively, on outermost layers (that is, surfaces on both sides).

From the viewpoint of more suitably exhibiting the effect of the present disclosure, it is preferable that the first polyolefin layer 11 and the second polyolefin layer 12 each have the above-described melting peak temperature.

In the adhesive film 1 of the present disclosure, the first polyolefin layer 11 and the second polyolefin layer 12 each contain a polyolefin-based resin. Examples of the polyolefin-based resin include polyolefins and acid-modified polyolefins. It is preferable that the first polyolefin layer 11 contains an acid-modified polyolefin, among polyolefin-based resins, and it is more preferable that the first polyolefin layer 11 is a layer formed of an acid-modified polyolefin. It is preferable that the second polyolefin layer 12 contains a polyolefin or an acid-modified polyolefin, more preferably a polyolefin, among polyolefin-based resins, and it is still more preferable that the second polyolefin layer 12 is a layer formed of a polyolefin or an acid-modified polyolefin. The polyolefin and the acid-modified polyolefin have high affinity for a heat-weldable resin such as a polyolefin. Therefore, further excellent adhesion can be exhibited at an interface between the adhesive film 1 and the heat-sealable resin layer 35 by disposing the first polyolefin layer 11 and the second polyolefin layer 12 formed of a polyolefin or an acid-modified polyolefin on the heat-sealable resin layer 35 side of the exterior material 3 for electrical storage devices.

Specific examples of the preferable laminated configuration of the adhesive film 1 of the present disclosure are as described above.

The acid-modified polyolefin is not particularly limited as long as it is a polyolefin modified with an acid, and a polyolefin graft-modified with an unsaturated carboxylic acid or an anhydride thereof is preferable.

Specific examples of the polyolefin to be acid-modified include polyethylenes such as low-density polyethylene, medium-density polyethylene, high-density polyethylene and linear low-density polyethylene; crystalline or noncrystalline polypropylene such as homopolypropylene, block copolymers of polypropylene (for example, block copolymers of propylene and ethylene, and block copolymers of propylene and butene) and random copolymers of polypropylene (e.g., random copolymers of propylene and ethylene, and block copolymers of propylene and butene); terpolymers of ethylene-butene-propylene; and the like. Among these polyolefins, polyethylenes and polypropylene are preferable, with polypropylene being particularly preferable.

The polyolefin modified with an acid may be a cyclic polyolefin. For example, the carboxylic acid-modified cyclic polyolefin is a polymer obtained by performing copolymerization with an α,β-unsaturated carboxylic acid or an anhydride thereof replacing a part of monomers that form the cyclic polyolefin, or by block-polymerizing or graft-polymerizing an α,β-unsaturated carboxylic acid or an anhydride thereof with the cyclic polyolefin.

The cyclic polyolefin modified with an acid is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Examples of the carboxylic acid or anhydride thereof which is used for acid modification include maleic acid, acrylic acid, itaconic acid, crotonic acid, maleic anhydride and itaconic anhydride. It is preferable that a peak derived from maleic anhydride is detected when the first polyolefin layer 11 is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. When the first polyolefin layer 11 or the second polyolefin layer 12 is a layer formed of a maleic anhydride-modified polyolefin, a peak derived from maleic anhydride is detected when measurement is performed by infrared spectroscopy. However, if the degree of acid modification is low, the peaks may be too small to be detected. In that case, the peaks can be analyzed by nuclear magnetic resonance spectroscopy.

The first polyolefin layer 11 and the second polyolefin layer 12 may be each formed from one resin component alone, or may be formed from a blend polymer obtained by combining two or more resin components. Further, the first polyolefin layer 11 and the second polyolefin layer 12 may each have only one layer, or two or more layers formed of the same resin component or different resin components. From formability of the first polyolefin layer 11 and the second polyolefin layer 12, it is preferable that these layers are each formed from a blend polymer obtained by combining two or more resin components. When formed from the blend polymer, it is preferable that the first polyolefin layer 11 contains acid-modified polypropylene as a main component (component contained at 50 mass% or more), and other resins at 50 mass% or less (polyethylene is preferable from the viewpoint of improving flexibility). In addition, it is preferable that the second polyolefin layer 12 contains polypropylene as a main component (component contained at 50 mass% or more), and other resins at 50 mass% or less (polyethylene is preferable from the viewpoint of improving flexibility). On the other hand, from the viewpoint of the electrolytic solution resistance of the first polyolefin layer 11 and the second polyolefin layer 12, it is preferable that the first polyolefin layer 11 contains acid-modified polypropylene alone as a resin, and it is preferable that the second polyolefin layer 12 contains acid-modified polypropylene or polypropylene alone as a resin.

Further, the first polyolefin layer 11 and the second polyolefin layer 12 may each contain a filler if necessary. The particle size of the filler is in the range of about 0.1 to 35 µm, preferably about 5.0 to 30 µm, more preferably about 10 to 25 µm. In addition, the contents of the fillers based on 100 parts by mass of resin components forming the first polyolefin layer 11 and the second polyolefin layer 12, respectively, are each about 5 to 30 parts by mass, more preferably about 10 to 20 parts by mass.

As the filler, either an inorganic filler or an organic filler can be used. Examples of the inorganic filler include carbon (carbon, graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide and calcium carbonate. In addition, examples of the organic filler include fluororesins, phenol resins, urea resins, epoxy resins, acrylic resins, benzoguanamine-formaldehyde condensates, melamine-formaldehyde condensates, crosslinked products of polymethyl methacrylate, and crosslinked products of polyethylene. From the viewpoint of shape stability, rigidity and content resistance, aluminum oxide, silica, fluororesins, acrylic resins and benzoguanamine-formaldehyde condensates are preferable, and among them, spherical aluminum oxide and silica are more preferable. As a method for mixing the filler with resin components that form the first polyolefin layer 11 and the second polyolefin layer 12, a method in which a masterbatch formed by melting and blending the resin components and the filler with a Banbury mixer or the like is adjusted to a predetermined mixing ratio; a method in which the filler is directly mixed with the resin components; or the like can be adopted.

In addition, the first polyolefin layer 11 and the second polyolefin layer 12 may each contain a pigment if necessary. As the pigment, various inorganic pigments can be used. As a specific example of the pigment, carbon (carbon, graphite) exemplified as the filler can be preferably exemplified. Carbon (carbon, graphite) is a material generally used inside an electrical storage device, and there is no possibility of being dissolved in an electrolytic solution. In addition, the carbon has a high coloring effect, allows a sufficient coloring effect to be obtained with an addition amount small enough not to hinder bondability, is not melted by heat, and is capable of increasing the apparent melt viscosity of the resin added. Further, it is possible to suitably seal the exterior material for electrical storage devices and the metal terminal by preventing a pressed portion from being thinned during thermal bonding (heat-sealing).

When a pigment is added to each of the first polyolefin layer 11 and the second polyolefin layer 12, for example, the addition amounts of the pigments based on 100 parts by mass of resin components forming the first polyolefin layer 11 and the second polyolefin layer 12, respectively, are each about 0.05 to 0.3 parts by mass, preferably about 0.1 to 0.2 parts by mass, when carbon black having a particle size of about 0.03 µm is used. By adding a pigment to the first polyolefin layer 11 and the second polyolefin layer 12, the presence or absence of the adhesive film 1 can be detected by a sensor, or can be visually inspected. When a filler and a pigment are added to the first polyolefin layer 11 and the second polyolefin layer 12, the filler and the pigment may be added to the first polyolefin layer 11 and the second polyolefin layer 12 identically, and from the viewpoint of ensuring that the heat-weldability of the adhesive film 1, it is preferable that the filler and the pigment are added separately between the first polyolefin layer 11 and the second polyolefin layer 12.

From the viewpoint of more suitably exhibiting the effect of the present disclosure, the thickness of each of the first polyolefin layer 11 and the second polyolefin layer 12 is preferably about 10 µm or more, more preferably about 15 µm or more, still more preferably about 20 µm or more, and preferably about 60 µm or less, more preferably about 55 µm or less, still more preferably 50 µm or less, still more preferably 40 µm or less. The thicknesses of each of the first polyolefin layer 11 and the second polyolefin layer 12 is preferably in the range of about 10 to 60 µm, about 10 to 55 µm, about 10 to 50 µm, about 10 to 40 µm, about 15 to 60 µm, about 15 to 55 µm, about 15 to 50 µm, about 15 to 40 µm, about 20 to 60 µm, about 20 to 55 µm, about 20 to 50 µm, or about 20 to 40 µm.

From the same viewpoint, the ratio of the thickness of the intermediate layer 13 to the total thickness of the first polyolefin layer 11 and the second polyolefin layer 12 is preferably about 0.3 or more, more preferably about 0.4 or more, and preferably about 1.0 or less, more preferably about 0.8 or less, and is preferably in the range of about 0.3 to 1.0, about 0.3 to 0.8, about 0.4 to 1.0, or about 0.4 to 0.8.

When the total thickness of the adhesive film 1 is 100%, the ratio of the total thickness of the first polyolefin layer 11 and the second polyolefin layer 12 is preferably about 30 to 80%, more preferably about 50 to 70%.

### [Intermediate layer 13]

In the adhesive film 1, the intermediate layer 13 is a layer that functions as a support for the adhesive film 1.

It is preferable that the intermediate layer 13 forms the resin layer A. From the viewpoint of more suitably exhibiting the effect of the present disclosure, it is preferable that the intermediate layer 13 has the above-described cross-sectional hardness.

The material for forming the intermediate layer 13 is not particularly limited. Examples of the material for forming the intermediate layer 13 include polyolefin-based resins, polyamide-based resins, polyester-based resins, epoxy resins, acrylic resins, fluororesins, silicone resins, phenol resins, silicon resins, polyurethane resins, polyether imide, polycarbonate, and mixtures and copolymers thereof. Among them, polyolefin-based resins are particularly preferable. That is, the material for forming the intermediate layer 13 is preferably a resin containing a polyolefin backbone such as a polyolefin or an acid-modified polyolefin. The resin forming the intermediate layer 13 can be confirmed to contain a polyolefin backbone by an analysis method such as infrared spectroscopy or gas chromatography mass spectrometry.

As described above, it is preferable that the intermediate layer 13 contains a polyolefin-based resin, more preferably a polyolefin, and it is still more preferable that the intermediate layer 13 is a layer formed of a polyolefin. The layer formed of polyolefin may be a stretched polyolefin film or an unstretched polyolefin film, and is preferably an unstretched polyolefin film. Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g., block copolymers of propylene and ethylene) and random copolymers of polypropylene (e.g., random copolymers of propylene and ethylene); terpolymers of ethylene-butene-propylene; and the like. Among these polyolefins, polyethylenes and polypropylene are preferred, with polypropylene being more preferred. In addition, it is preferable that the intermediate layer 13 contains homopolypropylene, it is more preferable that the intermediate layer 13 is formed of homopolypropylene and it is still more preferable that the base material is an unstretched homopolypropylene film because excellent electrolytic solution resistance is obtained.

Specific examples of the polyamide include aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 6I, nylon 6T, nylon 6IT and nylon 6I6T (I denotes isophthalic acid and T denotes terephthalic acid), and polyamides containing aromatics, such as polymethaxylylene adipamide (MXD6); cycloaliphatic polyamides such as polyaminomethyl cyclohexyl adipamide (PACM 6); polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

Specific examples of the polyester include polyethylene terephthalate, polybutylene terephthalate, polyethylene naphthalate, polybutylene naphthalate, polyethylene isophthalate, copolymerization polyesters with ethylene terephthalate as a main repeating unit, and copolymerization polyesters with a butylene terephthalate as a main repeating unit. Specific examples of the copolymerization polyester including ethylene terephthalate as a main repeating unit include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/isophthalate), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). Specific examples of the copolymerization polyester with butylene terephthalate as a main repeating unit include copolymer polyesters that are polymerized with butylene isophthalate and include butylene terephthalate as a main repeating unit (hereinafter, abbreviated as follows after polybutylene(terephthalate/isophthalate)), polybutylene(terephthalate/adipate), polybutylene(terephthalate/sebacate), polybutylene(terephthalate/decane dicarboxylate) and polybutylene naphthalate. These polyesters may be used alone, or may be used in combination of two or more thereof.

In addition, the intermediate layer 13 may be formed of a nonwoven fabric formed of any of the resins described above. When the intermediate layer 13 is a nonwoven fabric, it is preferable that the intermediate layer 13 is composed of the above-described polyolefin-based resin, polyamide resin or the like.

The intermediate layer 13 may be a single layer, or may have multiple layers. When the intermediate layer 13 has multiple layers, it is only required that at least one layer be the layer having a melting peak temperature of 135°C or higher. Specific examples of the layer having multiple layers include those having a three-layered configuration in which block polypropylene, homopolypropylene and block polypropylene or random propylene, block propylene and random propylene are laminated in the stated order.

In addition, a colorant can be blended into the intermediate layer 13 so that the intermediate layer 13 is a layer containing a colorant. In addition, the light transmittance can be adjusted by selecting a resin having low transparency. When the intermediate layer 13 is a film, it is also possible to use a colored film or a film having low transparency. In addition, when the intermediate layer 13 is a nonwoven fabric, it is possible to use a nonwoven fabric using fibers or a binder containing a colorant, or a nonwoven fabric having low transparency.

When the intermediate layer 13 is composed of a resin film, a surface of the intermediate layer 13 may be subjected to known easy-adhesive means such as corona discharge treatment, ozone treatment or plasma treatment if necessary.

From the viewpoint of more suitably exhibiting the effect of the present disclosure, the thickness of the intermediate layer 13 is preferably 120 µm or less, more preferably 110 µm or less, still more preferably about 100 µm or less, still more preferably about 90 µm or less. In addition, the thickness of the intermediate layer 13 is preferably about 20 µm or more, more preferably about 30 µm or more, still more preferably about 40 µm or more. The thickness of the intermediate layer 13 is preferably in the range of about 20 to 120 µm, about 20 to 110 µm, about 20 to 100 µm, about 20 to 90 µm, about 30 to 120 µm, about 30 to 110 µm, about 30 to 100 µm, about 30 to 90 µm, about 40 to 120 µm, about 40 to 110 µm, about 40 to 100 µm, or about 40 to 90 µm.

### [First adhesive layer 21 and second adhesive layer 22]

As shown in Fig. 3, when the adhesive film 1 does not include the intermediate layer 13, the first adhesive layer 21 is disposed between the first polyolefin layer 11 and the second polyolefin layer 12 to bond these layers. As shown in Fig. 4, when the adhesive film 1 includes the intermediate layer 13, the first adhesive layer 21 is disposed between the first polyolefin layer 11 and the intermediate layer 13. The second adhesive layer 22 is disposed between the second polyolefin layer 12 and the intermediate layer 13. In the present disclosure, it is preferable that at least one of the first adhesive layer 21 and the second adhesive layer 22 forms the adhesive layer P (that is, the adhesive layer is preferably an adhesive layer having a melting peak temperature of 100°C or lower.). In the adhesive film 1 of the present disclosure, when the melting peak temperature of at least one of the first adhesive layer 21 and the second adhesive layer 22 is 100°C or lower, the electrical storage device can be unsealed from the first adhesive layer 21 or second adhesive layer 22 that is the adhesive layer P having a melting peak temperature of 100°C or lower. That is, when the adhesive film 1 of the present disclosure includes only the first adhesive layer 21, of the first adhesive layer 21 and the second adhesive layer 22, the melting peak temperature of the first adhesive layer 21 is 100°C or lower, and unsealing occurs at the first adhesive layer 21. When the adhesive film 1 includes only the second adhesive layer 22, the melting peak temperature of the second adhesive layer 22 is 100°C or lower, and unsealing occurs at the second adhesive layer 22. When the adhesive film 1 includes both the first adhesive layer 21 and the second adhesive layer 22, the melting peak temperature of at least one of the first adhesive layer 21 and the second adhesive layer 22 is 100°C or lower, and unsealing occurs at a layer having a melting peak temperature of 100°C or lower.

The adhesive layer P is preferably a cured product of a resin composition containing an acid-modified polyolefin and a curing agent. It is preferable that each of the first adhesive layer 21 and the second adhesive layer 22 is also a cured product of a resin composition containing an acid-modified polyolefin and a curing agent.

The acid-modified polyolefin is not particularly limited as long as it is an acid-modified polyolefin having a molecular weight allowing the polyolefin to be dissolved in a hydrocarbon-based solvent, and a polyolefin graft-modified with an unsaturated carboxylic acid or an anhydride thereof is preferable. Examples of the acid-modified polyolefin and the carboxylic acid used for acid modification or an anhydride thereof are the same as those exemplified in the section "First polyolefin layer 11 and second polyolefin layer 12". The acid-modified polyolefin can be synthesized by the method described in WO 2015/033703.

Each of the first adhesive layer 21 and the second adhesive layer 22 is preferably a cured product of a resin composition containing an acid-modified polyolefin and at least one selected from the group consisting of a compound having an isocyanate group, a compound having an oxazoline group, and a compound having an epoxy group, especially preferably a cured product of a resin composition containing an acid-modified polyolefin and at least one selected from the group consisting of a compound having an isocyanate group and a compound having an epoxy group.

The compound having an isocyanate group is not particularly limited, and is preferably a polyfunctional isocyanate compound. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the first adhesive layer 21 and the second adhesive layer 22 is preferably in the range of 0.1 to 50 mass%, more preferably in the range of 0.5 to 40 mass% in the resin composition forming the first adhesive layer 21 and the second adhesive layer 22.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the first adhesive layer 21 and the second adhesive layer 22 is preferably in the range of 0.1 to 50 mass%, more preferably in the range of 0.5 to 40 mass% in the resin composition forming the first adhesive layer 21 and the second adhesive layer 22.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2,000, more preferably about 100 to 1,000, still more preferably about 200 to 800. In the present disclosure, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, bisphenol F-type glycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the first adhesive layer 21 and the second adhesive layer 22 is preferably in the range of 0.1 to 50 mass%, more preferably in the range of 0.5 to 40 mass% in the resin composition forming the first adhesive layer 21 and the second adhesive layer 22.

From the viewpoint of more suitably exhibiting the effect of the present disclosure, the thickness of each of the first adhesive layer 21 and the second adhesive layer 22 is preferably about 0.1 µm or more, more preferably about 1 µm or more, still more preferably about 2 µm or more, and preferably about 5 µm or less, more preferably about 3 µm or less. The thickness of each of the first adhesive layer 21 and the second adhesive layer 22 is preferably in the range of 0.1 to 5 µm, about 0.1 to 3 µm, about 1 to 5 µm, about 1 to 3 µm, about 2 to 5 µm, or about 2 to 3 µm.

The first adhesive layer 21 and the second adhesive layer 22 can be formed by performing coating by a known coating method such as a dry lamination method, a bar coating method, a roll coating method or a gravure coating method, and drying. The amount of application of the adhesive (mixed liquid of a resin, a curing agent and a solvent) for forming the first adhesive layer 21 and the second adhesive layer 22 can be appropriately adjusted to the-described above thickness, and may be, for example, about 0.05 to 3.0 mg/m², preferably about 0.1 to 2.0 mg/m².

The adhesive film 1 of the present disclosure can be manufactured by, for example, laminating the first polyolefin layer 11 and the second polyolefin layer 12 onto both surfaces, respectively, of the intermediate layer 13 with the first adhesive layer 21 and the second adhesive layer 22 interposed therebetween. For laminating the intermediate layer 13 and the first polyolefin layer 11 and second polyolefin layer 12 with the first adhesive layer 21 and the second adhesive layer 22 interposed therebetween, a known method such as a dry lamination method may be used.

It is preferable that the adhesive film 1 of the present disclosure is unsealed at 100°C or higher and lower than 130°C in terms of a test sample in <Unsealing test method> below.

### <Unsealing test method>

An exterior material for electrical storage devices with a total thickness of 121 µm, in which a base material layer (PET (thickness: 12 µm)/adhesive (thickness: 2 µm)/nylon (thickness: 15 µm)), an adhesive agent layer (thickness: 2 µm), a barrier layer (aluminum alloy foil having a thickness of 40 µm)/an adhesive layer (maleic anhydride-modified polypropylene having a thickness of 25 µm) and a heat-sealable resin layer (polypropylene having a melting peak temperature of 140°C and a thickness of 25 µm) are laminated in the stated order, is cut to a size of 8 cm in width (z direction) and 19 cm in length (x direction). Next, as shown in the schematic views of Figs. 1 and 2, the adhesive film is disposed between the heat-sealable resin layers at a location of the peripheral edge portion 3a on the side of the short side where the heat-sealable resin layers of the exterior material for electrical storage devices are heat-sealed. The size of the adhesive film is set to 3 cm in wide (z direction) and 1.5 cm in length (x direction). A metal terminal is not used in the unsealing test method although a metal terminal is present in the schematic view of Fig. 1. Next, under the conditions of a pressure of 0.5 MPa, a temperature of 190°C and a seal width of 3 mm for 3 seconds, a short side on which the adhesive film of the exterior material for electrical storage devices as a test piece is disposed, and a short side opposed thereto are heat-sealed. Here, both surfaces of the adhesive film are heat-sealed to the heat-sealable resin layer. Further, one long side is similarly heat-sealed, 1 g of water is added to the bag-shaped sample, and the opening side (long side) is then similarly heat-sealed to obtain a sealed test sample containing water. A thermocouple is attached to the test sample, the test sample is placed in an oven, and heated from room temperature (25°C) to a test sample temperature of 140°C at a temperature rise rate of 6°C/min.

### [Exterior material 3 for electrical storage devices]

Examples of the exterior material 3 for electrical storage devices include materials having a laminated structure including a laminate having at least a base material layer 31, a barrier layer 33, and a heat-sealable resin layer 35 in the stated order. Fig. 5 shows an aspect in which the base material layer 31, an adhesive agent layer 32 provided if necessary, the barrier layer 33, an adhesive layer 34 provided if necessary, and the heat-sealable resin layer 35 are laminated in the stated order as an example of a cross-sectional structure of the exterior material 3 for electrical storage devices. In the exterior material 3 for electrical storage devices, the base material layer 31 is on the outer layer side, and the heat-sealable resin layer 35 is an innermost layer. During construction of an electrical storage device, the heat-sealable resin layers 35 located on the peripheral edge of the electrical storage device element 4 is brought into contact with each other, and heat-sealed to seal the electrical storage device element 4, so that the electrical storage device element 4 is sealed. Figs. 1 and 2 show the electrical storage device 10 where the embossed-type exterior material 3 for electrical storage devices, which is molded by embossing molding, is used, but the exterior material 3 for electrical storage devices may be of non-molded pouch type. Examples of the pouch type include three-way seal, four-way seal and pillow type, and any of the types may be used.

The thickness of the laminate forming the exterior material 3 for electrical storage devices is not particularly limited, and the upper limit is preferably about 180 µm or less, about 160 µm or less, about 155 µm or less, about 140 µm or less, about 130 µm or less, or about 120 µm or less from the viewpoint of cost reduction, improvement of the energy density and the like, and the lower limit is preferably about 35 µm or more, about 45 µm or more, about 60 µm or more, or about 80 µm or more from the viewpoint of maintaining the function of the exterior material 3 for electrical storage devices, i.e., a function of protecting the electrical storage device element 4. For example, the thickness is preferably in the range of about 35 to 180 µm, about 35 to 160 µm, about 35 to 155 µm, about 35 to 140 µm, about 35 to 130 µm, about 35 to 120 µm, about 45 to 180 µm, about 45 to 160 µm, about 45 to 155 µm, about 45 to 140 µm, about 45 to 130 µm, about 45 to 120 µm, about 60 to 180 µm, about 60 to 160 µm, about 60 to 155 µm, about 60 to 140 µm, about 60 to 130 µm, about 60 to 120 µm, about 80 to 180 µm, about 80 to 160 µm, about 80 to 155 µm, about 80 to 140 µm, about 80 to 130 µm or about 80 to 120 µm.

### (Base material layer 31)

In the exterior material 3 for electrical storage devices, the base material layer 31 is a layer that functions as a base material of the exterior material for electrical storage devices, and forms the outermost layer side of the exterior material for electrical storage devices.

The material that forms the base material layer 31 is not particularly limited as long as it has an insulation quality. Examples of the material that forms the base material layer 31 include polyester, polyamide, epoxy, acrylic resins, fluororesins, polyurethane, silicone resins, phenol, polyetherimide, polyimide and mixtures and copolymers thereof. Polyester such as polyethylene terephthalate or polybutylene terephthalate has the advantage that it is excellent in electrolytic solution resistance, so that whitening etc. due to deposition of an electrolytic solution is hardly occurs, and thus the polyester is suitably used as a material for formation of the base material layer 31. In addition, a polyamide film is excellent in stretchability, can prevent occurrence of whitening due to resin breakage in the base material layer 31 during molding, and is thus suitably used as a material for formation of the base material layer 31.

The base material layer 31 may be formed of a uniaxially or biaxially stretched resin film, or may be formed of an unstretched resin film. Among them, a uniaxially or biaxially stretched resin film, particularly a biaxially stretched resin film has improved heat resistance through orientation and crystallization, and is therefore suitably used as the base material layer 31.

Among them, nylons and polyesters are preferable and biaxially stretched nylons and biaxially stretched polyesters are more preferable as resin films for formation of the base material layer 31.

The base material layer 31 can also be laminated with a resin film which is made of a different material for improving pinhole resistance, and insulation quality as a packaging of an electrical storage device. Specific examples include a multi-layered structure in which a polyester film and a nylon film are laminated, and a multi-layered structure in which a biaxially stretched polyester and a biaxially stretched nylon are laminated. When the base material layer 31 is made to have a multi-layered structure, the resin films may be bonded with the use of an adhesive, or may be directly laminated without the use of an adhesive. Examples of the method for bonding the resin films without the use of an adhesive include methods in which the resin films are bonded in a heat-melted state, such as a co-extrusion method, a sand lamination method and a thermal lamination method.

In addition, the friction of the base material layer 31 may be reduced for improving moldability. When the friction of the base material layer 31 is reduced, the friction coefficient of the surface thereof is not particularly limited, and it is, for example, 1.0 or less. Examples of the method for reducing the friction of the base material layer 31 include matting treatment, formation of a thin film layer of a slipping agent, and a combination thereof.

The thickness of the base material layer 31 is, for example, about 10 to 50 µm, preferably about 15 to 30 µm.

### (Adhesive agent layer 32)

In the exterior material 3 for electrical storage devices, the adhesive agent layer 32 is a layer disposed on the base material layer 31 if necessary for imparting adhesion to the base material layer 31. That is, the adhesive agent layer 32 is provided between the base material layer 31 and the barrier layer 33.

The adhesive agent layer 32 is formed from an adhesive capable of bonding the base material layer 31 and the barrier layer 33. The adhesive used for forming the adhesive agent layer 32 may be a two-liquid curable adhesive, or may be a one-liquid curable adhesive. In addition, the adhesion mechanism of the adhesive used for forming the adhesive agent layer 32 is not particularly limited, and may be any one of a chemical reaction type, a solvent volatilization type, a heat melting type, a heat pressing type and so on.

As resin components of adhesives that can be used for formation of the adhesive agent layer 32, polyurethane-based two-liquid curable adhesive agents; and polyamides, polyesters or blend resins of these resins and modified polyolefins are preferable because they are excellent in spreadability, durability and a yellowing inhibition action under high-humidity conditions, a thermal degradation inhibition action during heat-sealing, and so on, and effectively suppress occurrence of delamination by inhibiting a reduction in lamination strength between the base material layer 31 and the barrier layer 33.

The adhesive agent layer 32 may be made multilayered with different adhesive components. When the adhesive agent layer 32 is made multilayered with different components, it is preferable that a resin excellent in bondability to the base material layer 31 is selected as an adhesive component to be disposed on the base material layer 31 side, and an adhesive component excellent in bondability to the barrier layer 33 is selected as an adhesive component to be disposed on the barrier layer 33 side, from the viewpoint of improving lamination strength between the base material layer 31 and the barrier layer 33. When the adhesive agent layer 32 is made multilayered with different adhesive components, specific examples of the preferred adhesive component to be disposed on the barrier layer 33 side include acid-modified polyolefins, metal-modified polyolefins, mixed resins of polyesters and acid-modified polyolefins, and resins containing a copolymerization polyester.

The thickness of the adhesive agent layer 32 is, for example, about 0.5 to 50 µm, preferably about 1 to 25 µm.

### (Barrier layer 33)

In the exterior material 3 for electrical storage devices, the barrier layer 33 is a layer which is intended to improve the strength of the exterior material for electrical storage devices and which has a function of preventing ingress of water vapor, oxygen, light and the like into the electrical storage device. The barrier layer 33 is preferably a metal layer, i.e., a layer formed of a metal. Specific examples of the metal forming the barrier layer 33 include aluminum, stainless and titanium, with aluminum being preferred. The barrier layer 33 can be formed from, for example, a metal foil, a metal vapor-deposited film, an inorganic oxide vapor-deposited film, a carbon-containing inorganic oxide vapor-deposited film, a film provided with any of these vapor-deposited films, or the like, and is formed preferably from a metal foil, more preferably from an aluminum foil. From the viewpoint of preventing generation of wrinkles and pinholes in the barrier layer 33 during manufacturing of the exterior material for electrical storage devices, it is more preferable to form the barrier layer from a soft aluminum foil such as annealed aluminum (JIS H4160: 1994 A8021H-O, JIS H4160: 1994 A8079H-O, JIS H4000:2014 A8021P-O, JIS H4000:2014 A8079P-O).

The thickness of the barrier layer 33 is preferably about 10 to 200 µm, more preferably about 20 to 100 µm, from the viewpoint of making pinholes less likely to be generated by molding while thinning the exterior material for electrical storage devices.

In addition, at least one surface, preferably both surfaces, of the barrier layer 33 are subjected to a chemical conversion treatment for stabilization of bonding, prevention of dissolution and corrosion, and so on. Here, the chemical conversion treatment is a treatment for forming a corrosion-resistant film on the surface of the barrier layer.

### (Adhesive layer 34)

In the exterior material 3 for electrical storage devices, the adhesive layer 34 is a layer provided between the barrier layer 33 and the heat-sealable resin layer 35 if necessary for firmly bonding the heat-sealable resin layer 35.

The adhesive layer 34 is formed from an adhesive capable of bonding the barrier layer 33 and the heat-sealable resin layer 35 to each other. The composition of the adhesive used for forming the adhesive layer is not particularly limited, and examples thereof include resin compositions containing an acid-modified polyolefin. Examples of the acid-modified polyolefin include those identical to the acid-modified polyolefins exemplified for the first polyolefin layer 11 and the second polyolefin layer 12.

The thickness of the adhesive layer 34 is, for example, about 1 to 40 µm, preferably about 2 to 30 µm.

### (Heat-sealable resin layer 35)

In the exterior material 3 for electrical storage devices, the heat-sealable resin layer 35 is a layer which corresponds to an innermost layer and performs a function of hermetically sealing the electrical storage device element by heat-sealing the heat-sealable resin layers to each other during construction of the electrical storage device.

As described above, the absolute value of a difference between the melting peak temperature mp3 of the heat-sealable resin layer 35 of the exterior material 3 for electrical storage devices for which the adhesive film 1 of the present disclosure is used and the melting peak temperature mp 1 of an outermost layer of the adhesive film 1 (for example, the first polyolefin layer 11 or the second polyolefin layer 12) is preferably about 0 to 5°C, or about 0 to 3°C. When the absolute value of a difference between the melting peak temperatures decreases (that is, the absolute value of a difference becomes closer to 0°C), the heat-sealable resin layer 35 of the exterior material 3 for electrical storage devices and the outermost layer of the adhesive film 1 are both melted in heat-sealing to the exterior material for electrical storage devices with the adhesive film, so that it becomes easier to enhance adhesion between the outermost layer of the adhesive film and the heat-sealable resin layer 35.

The resin component to be used in the heat-sealable resin layer 35 is not particularly limited as long as it can be heat-welded, and examples thereof include polyolefins and cyclic polyolefins.

As described above, the absolute value of a difference between the melt mass flow rate (MFR) T4 of the heat-sealable resin layer 35 of the exterior material 3 for electrical storage devices for which the adhesive film 1 of the present disclosure is used and the melt mass flow rate (MFR) T2 of the outermost layer of the adhesive film 1 (for example, the first polyolefin layer 11 or the second polyolefin layer 12) is preferably about 0 to 5 g/10 min, or about 0 to 3 g/10 min. When the absolute value of a difference between the melt mass flow rate (MFR) T4 and the melt mass flow rate (MFR) T2 (that is, the absolute value of a difference becomes closer to 0 g/10 min), the heat-sealable resin layer 35 of the exterior material 3 for electrical storage devices and the outermost layer of the adhesive film 1 are both melted in heat-sealing to the exterior material 3 for electrical storage devices with the adhesive film, so that it becomes easier to enhance adhesion between the outermost layer of the adhesive film 1 and the heat-sealable resin layer 35. Note that MFR is measured at a temperature higher than the melting point of a resin to be measured, and is measured at, for example, 230°C in the case of polypropylene and at 250°C in the case of polybutylene terephthalate.

Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g., block copolymers of propylene and ethylene) and random copolymers of polypropylene (e.g., random copolymers of propylene and ethylene); terpolymers of ethylene-butene-propylene; and the like. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Among these resin components, crystalline or noncrystalline polyolefins, cyclic polyolefins and blend polymers thereof are preferable, and polyethylene, polypropylene, copolymers of ethylene and norbornene, and blend polymers of two or more thereof are more preferable.

The heat-sealable resin layer 35 may be formed from one resin component alone, or may be formed from a blend polymer obtained by combining two or more resin components. Further, the heat-sealable resin layer 35 may have only one layer, but may have two or more layers formed of the same resin component or different resin components. It is particularly preferable that the outermost layer of the adhesive film 1 and the heat-sealable resin layer 35 have the same resin because adhesion between these layers is improved.

The melting peak temperature of the heat-sealable resin layer 35 is, for example, about 120°C or higher, preferably about 125°C or higher, more preferably 130°C or higher, still more preferably 135°C or higher, still more preferably 140°C or higher, and preferably about 160°C or lower, more preferably 155°C or lower. The melting peak temperature of the heat-sealable resin layer 35 is preferably in the range of about 120 to 160°C, about 120 to 155°C, about 125 to 160°C, about 125 to 155°C, about 130 to 160°C, about 130 to 155°C, about 135 to 160°C, about 135 to 155°C, about 140 to 160°C, or about 140 to 155°C. As described above, when both the melting peak temperature of the second polyolefin layer 12 disposed on the side of the exterior material 3 for electrical storage devices and the melting peak temperature of the heat-sealable resin layer 35 of the exterior material 3 for electrical storage devices are 130°C or higher, it is possible to seal the electrical storage device until the electrical storage device reaches a high temperature (for example, 100°C to 130°C, preferably 110°C to 130°C, particularly preferably 120°C to 130°C), and to unseal the electrical storage device at the location of the adhesive film to release gas generated inside the electrical storage device to the outside when the electrical storage device reaches the high temperature (for example, 100°C to 130°C, preferably 110°C to 130°C, particularly preferably 120°C to 130°C). From the same viewpoint, the melting peak temperature of heat-sealable resin layer 35 is preferably higher than the melting peak temperature of at least one of the outermost layers of adhesive film 1.

The thickness of the heat-sealable resin layer 35 is not particularly limited, and is, for example, about 2 to 2000 µm, preferably about 5 to 1000 µm, still more preferably about 10 to 500 µm. The thickness of the heat-sealable resin layer 35 is, for example, about 100 µm or less, preferably about 85 µm or less, more preferably about 15 to 85 µm. For example, when the thickness of the adhesive layer 34 described later is 10 µm or more, the thickness of the heat-sealable resin layer 35 is preferably about 85 µm or less, more preferably about 15 to 45 µm. For example, when the thickness of the adhesive layer 34 described later is less than 10 µm or the adhesive layer 34 is not provided, the thickness of the heat-sealable resin layer 35 is preferably about 20 µm or more, more preferably about 35 to 85 µm.

### 2. Electrical storage device

The electrical storage device 10 of the present disclosure is an electrical storage device having a structure in which an electrical storage device element 4 is housed in a packaging formed of the exterior material 3 for electrical storage devices. The exterior material 3 for electrical storage devices includes a laminate including at least the base material layer 31, the barrier layer 33 and the heat-sealable resin layer 35 in the stated order from the outside, and the heat-sealable resin layers 35 of the exterior material 3 for electrical storage devices are heat-sealed to house the electrical storage device element 4 in the packaging. The adhesive film 1 is disposed so as to be interposed between the heat-sealable resin layers 35 at a location where the heat-sealable resin layers 35 are heat-sealed. As described above, the adhesive film 1 includes at least the resin layer A and the adhesive layer P, the melting peak temperature of the resin layer A is 135°C or higher, and the melting peak temperature of the adhesive layer P is 100°C or lower. That is, the electrical storage device 10 of the present disclosure can be manufactured by a method including a housing step of housing the electrical storage device element 4 in a packaging by disposing the adhesive film 1 so as to interpose the adhesive film 1 between the heat-sealable resin layers 35 at a location where the heat-sealable resin layers 35 of the exterior material 3 for electrical storage devices are heat-sealed, and heat-sealing the heat-sealable resin layers 35 with the adhesive film 1 interposed therebetween.

Specifically, the electrical storage device element 4 including at least a positive electrode, a negative electrode and an electrolyte is covered with the exterior material 3 for electrical storage devices such that a flange portion (a region that where the heat-sealable resin layers 35 are in contact with each other, the region forming the peripheral edge portion 3a of the exterior material for electrical storage devices) of the exterior material 3 for electrical storage devices can be formed on the peripheral edge of the electrical storage device element 4 while the metal terminal 2 connected to each of the positive electrode and the negative electrode protrudes to the outside, and the heat-sealable resin layers 35 at the flange portion are heat-sealed to seal the electrical storage device element 4. Here, at a part of a location where heat-sealing is performed, the adhesive film 1 is disposed between the heat-sealable resin layers 35, and heat-sealed, thereby providing the electrical storage device 10 utilizing the adhesive film 1. When the electrical storage device element 4 is stored using the exterior material 3 for electrical storage devices, the heat-sealable resin layer 35 of the exterior material 3 for electrical storage devices is on the inner side (a surface contacting the electrical storage device element 4).

Details of the adhesive film 1 of the present disclosure which is used in the electrical storage device 10 of the present disclosure are as described above.

As described above, the adhesive film 1 is disposed so as to be interposed between the heat-sealable resin layers 35 at a location where the heat-sealable resin layers 35 of the exterior material 3 for electrical storage devices are heat-sealed in the electrical storage device 10. As shown in, for example, Figs. 1 and 2, the adhesive film 1 of the present disclosure is interposed between heat-sealable resin layers facing each other at the location of the peripheral edge portion 3a of the exterior material 3 for electrical storage devices where the heat-sealable resin layers 35 are heat-sealed for sealing an electrical storage device element 4 in the electrical storage device 10 of the present disclosure. The adhesive film 1 and the heat-sealable resin layer 35 on each of both sides thereof are heat-sealed in sealing of the electrical storage device element 4 with the exterior material 3 for electrical storage devices.

The electrical storage device 10 of the present disclosure is such that the electrical storage device is sealed until the electrical storage device reaches a high temperature (for example, 100°C to 130°C, preferably 110°C to 130°C, particularly preferably 120°C to 130°C), and the electrical storage device is unsealed at the location of the adhesive film to release gas generated inside the electrical storage device to the outside when the electrical storage device reaches the high temperature (for example, 100°C to 130°C, preferably 110°C to 130°C, particularly preferably 120°C to 130°C). Since the adhesive film 1 is disposed at a part of the location where the heat-sealable resin layers 35 of the exterior material 3 for electrical storage devices are heat-sealed, gas can be selectively discharged to the outside from the specific location where the adhesive film 1 is disposed. That is, in the electrical storage device 10 of the present disclosure, the location where gas is discharged by unsealing can be set at any location in the hear-sealing portion between the heat-sealable resin layers 35.

As described above, the location where the adhesive film 1 is disposed is not particularly limited as long as it is a location where the heat-sealable resin layers 35 of the exterior material 3 for electrical storage devices are heat-sealed. For example, when the electrical storage device 10 has an oblong shape in plan view, the adhesive film 1 may be disposed on either the long side or the short side of the peripheral edge portion 3a of the heat-sealed exterior material 3 for electrical storage devices. The adhesive film 1 may be disposed at one, or two or more, of locations where the heat-sealable resin layers 35 of the exterior material 3 for electrical storage devices are heat-sealed.

In the electrical storage device 10 of the present disclosure, the size of the adhesive film 1 is not particularly limited as long as gas is appropriately discharged at the time of unsealing as described above. For example, when as shown in Fig. 1, the electrical storage device 10 has a rectangular shape in plan view, and the adhesive film 1 is disposed along one side of the rectangular shape (in the example of Fig. 1, the adhesive film is disposed along the z direction), the ratio of the length of the adhesive film 1 to the length of the side may be about 3 to 98%. The size of the adhesive film 1 in the width direction (a direction perpendicular to the length direction and the thickness direction; or a direction along the x direction in the example of Fig. 1) may be about 20 to 300% with respect to the length, which is defined as 100%.

In the electrical storage device 10, a metal terminal 2 is electrically connected to the electrical storage device element 4, and protrudes to the outside of the exterior material 3 for electrical storage devices. It is preferable that the adhesive film of the present disclosure is not located between the metal terminal 2 and the exterior material 3 for electrical storage devices (heat-sealable resin layer 35). Further, it is preferable that the adhesive film 1 of the present disclosure is not in contact with the metal terminal 2.

The electrical storage device of the present disclosure may be an electrical storage device such as a battery (including a condenser, a capacitor and the like). The electrical storage device of the present disclosure may be either a primary battery or secondary battery, and is preferably a secondary battery. The type of secondary battery is not particularly limited, and examples thereof include lithium ion batteries, lithium ion polymer batteries, all-solid-state batteries, semi-solid-state batteries, pseudo-solid-state batteries, polymer batteries, all-polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Among these secondary batteries, lithium ion batteries and lithium ion polymer batteries are suitable.

### [Metal terminal 2]

The metal terminal 2 (tab) is a conductive member electrically connected to an electrode (positive electrode or negative electrode) of the electrical storage device element 4, and is composed of a metal material. The metal material that forms the metal terminal 2 is not particularly limited, and examples thereof include aluminum, nickel, and copper. For example, the metal terminal 2 connected to a positive electrode of a lithium ion electrical storage device is typically composed of aluminum or the like. In addition, the metal terminal 2 connected to a negative electrode of a lithium ion electrical storage device is typically composed of copper, nickel or the like.

From the viewpoint of enhancing electrolytic solution resistance, it is preferable that the surface of the metal terminal 2 is subjected to chemical conversion treatment. For example, when the metal terminal 2 is formed of aluminum, specific examples of the chemical conversion treatment include a known method in which a corrosion-resistant film of a phosphate, a chromate, a fluoride, a triazinethiol compound or the like. Among the methods for forming a corrosion-resistant film, phosphoric acid chromate treatment using a material including three components: a phenol resin, a chromium (III) fluoride compound and phosphoric acid is preferred.

The size of the metal terminal 2 may be appropriately set according to the size of an electrical storage device used. The thickness of the metal terminal 2 is preferably about 50 to 1000 µm, more preferably about 70 to 800 µm. In addition, the length of the metal terminal 2 is preferably about 1 to 200 mm, more preferably about 3 to 150 mm. In addition, the width of the metal terminal 2 is preferably about 1 to 200 mm, more preferably about 3 to 150 mm.

### EXAMPLES

Hereinafter, the present disclosure will be described in detail by way of examples and comparative examples. However, the present disclosure is not limited to the examples.

### Example 1

### <Manufacturing of adhesive film>

As an acid-modified polyolefin, a maleic anhydride-modified propylene-butene copolymer (having an acid value of 20 mg KOH/g-resin and a weight average molecular weight of 70,000) was prepared by reference to WO 2015/033703. Next, a 10% solution was prepared using methylcyclohexane, and a polyfunctional isocyanate compound (TAP 100) manufactured by Asahi Kasei Corporation was added at 1.5% as a curing agent to obtain an adhesive. Next, an unstretched polypropylene film (CPP, homopolypropylene, melting peak temperature: 163°C, thickness: 50 µm) was provided as an intermediate layer. To one surface of the film, an adhesive (a resin composition containing a maleic anhydride-modified polypropylene-butene copolymer and a curing agent) was applied in an amount of 3 g/m², and a maleic anhydride-modified polypropylene film (PPa, melting peak temperature: 120°C, thickness: 40 µm) was laminated at a temperature of 120°C using a laminator. A maleic anhydride-modified polypropylene film (PPa, melting peak temperature: 140°C, thickness: 50 µm) was similarly laminated to the opposite surface of the intermediate layer, and the laminate was aged at 80°C for 72 hours to obtain an adhesive film in which a first polyolefin layer (a PPa layer having a melting peak temperature of 120°C and a thickness of 40 µm), a first adhesive layer (a PPa cured layer having a melting peak temperature of 93°C and a thickness of 3 µm), an intermediate layer (a CPP layer having a melting peak temperature of 163°C and a thickness 50 µm), a second adhesive layer (a PPa cured layer having a melting peak temperature of 93°C and a thickness of 3 µm) and a second polyolefin layer (a PPa layer having a melting peak temperature of 140°C and a thickness of 50 µm) were laminated in the stated order. In the adhesive film, the intermediate layer forms the resin layer A having a melting peak temperature of 135°C or higher, and the first adhesive layer and the second adhesive layer each form the adhesive layer P having a melting peak temperature of 100°C or lower.

### <Measurement of melting peak temperature>

For each layer for forming the adhesive film, the melting peak temperature was measured in accordance with the provisions of JIS K 7121: 2012 (Testing Methods for Transition Temperatures of Plastics (Amendment 1 of JIS K 7121: 1987)). The measurement was performed with a differential scanning calorimeter (DSC, Differential Scanning Calorimeter Q200 manufactured by TA Instruments). The measurement sample was held at -50°C for 15 minutes, then heated from -50°C to 210°C at a temperature rise rate of 10°C/min to measure the first melting peak temperature P (°C), and then held at 210°C for 10 minutes. Next, the measurement sample was cooled from 210°C to -50°C at a temperature lowering rate of 10°C/min, and held for 15 minutes. Further, the second melting peak temperature Q (°C) was measured by heating the measurement sample from -50°C to 210°C at a temperature rise rate of 10°C/min. The flow rate of the nitrogen gas was set to 50 ml/min. In accordance with the above procedure, the first measured melting peak temperature P (°C) and the second measured melting peak temperature Q (°C) were determined, and the first measured melting peak temperature was adopted as a melting peak temperature. Note that when the measurement sample has a high melting peak temperature, the melting peak temperature may be measured by heating the sample from -50°C to 500°C at the same temperature rise rate. Table 1 shows the measurement results.

### <Measurement of cross-sectional hardness>

The martens hardness was adopted as the cross-sectional hardness. An adhesive film was cut into a size of 1.5 cm × 5 mm, embedded in a heat-resistant thermosetting epoxy resin, and polished together with the epoxy resin to expose a cross section, thereby obtaining a measurement sample. Next, a heating stage was installed on an ultra-microhardness tester equipped with a Vickers indenter (HM 2000 manufactured by Fischer Instruments K.K.), and the cross-section sample was set on the stage, and heated for 5 minutes until the sample reaches 110°C. Next, against the center of a layer of the measurement sample at which the cross-sectional hardness was measured, the indenter was pressed to a depth of 1 µm at a pressing rate of 0.1 µm/s to measure the cross-sectional hardness of each layer. The measurement was performed 10 times, and an average value thereof was adopted as a measured value. Table 1 shows the measurement results.

### <Ten-point average roughness of surface of outermost layer of adhesive film 1>

The ten-point average roughness of the surface of the first polyolefin layer of the adhesive film obtained in each of Examples 1 to 3 was measured by a method in accordance with the provisions of JIS B 0601: 1994. The measurement was performed under conditions of an objective lens magnification of 50 and no cutoff using Laser Microscope VK-9710 manufactured by KEYENCE CORPORATION. As a result, the ten-point average roughness was 0.67 µm in Example 1, 0.64 µm in Example 2, and 0.68 µm in Example 3.

### <Unsealing test method>

An exterior material for electrical storage devices with a total thickness of 121 µm, in which a base material layer (PET (thickness: 12 µm)/adhesive (thickness: 2 µm)/nylon (thickness: 15 µm)), an adhesive agent layer (thickness: 2 µm), a barrier layer (aluminum alloy foil having a thickness of 40 µm)/an adhesive layer (maleic anhydride-modified polypropylene having a thickness of 25 µm) and a heat-sealable resin layer (polypropylene having a melting peak temperature of 140°C and a thickness of 25 µm) were laminated in the stated order, was cut to a size of 8 cm in width (z direction) and 19 cm in length (x direction). Next, as shown in the schematic views of Figs. 1 and 2, the adhesive film was disposed between the heat-sealable resin layers at a location of the peripheral edge portion 3a on the side of the short side where the heat-sealable resin layers of the exterior material for electrical storage devices were heat-sealed. The size of the adhesive film was set to 3 cm in wide (z direction) and 1.5 cm in length (x direction). A metal terminal was not used in the unsealing test method although a metal terminal is present in the schematic view of Fig. 1. Next, under the conditions of a pressure of 0.5 MPa, a temperature of 190°C and a seal width of 3 mm for 3 seconds, a short side on which the adhesive film of the exterior material for electrical storage devices as a test piece is disposed, and a short side opposed thereto were heat-sealed. Here, both surfaces of the adhesive film are heat-sealed to the heat-sealable resin layer. Further, one long side was similarly heat-sealed, 1 g of water was added to the bag-shaped sample, and the opening side (long side) was then similarly heat-sealed to obtain a sealed test sample containing water. A thermocouple was attached to the test sample, the test sample was placed in an oven, and heated from room temperature (25°C) to a test sample temperature of 140°C at a temperature rise rate of 6°C/min. The unsealing temperature was evaluated on the basis of the following criteria. The results are shown in Table 1.
A: The test sample was unsealed at 100°C or higher and lower than 130°C.
B: The test sample was unsealed at lower than 100°C.
C: The test sample was unsealed at 130°C or higher.

### Example 2

A sample was prepared and evaluated in the same manner as in Example 1 except that a maleic anhydride-modified polypropylene film (PPa, melting peak temperature: 140°C, thickness: 40 µm) was used as the second polyolefin layer. The results are shown in Table 1. In the adhesive film, the intermediate layer forms the resin layer A having a melting peak temperature of 135°C or higher, and the first adhesive layer and the second adhesive layer each form the adhesive layer P having a melting peak temperature of 100°C or lower.

### Example 3

A sample was prepared and evaluated in the same manner as in Example 1 except that a maleic anhydride-modified polypropylene film (PPa, melting peak temperature: 140°C, thickness: 50 µm) was used as the first polyolefin layer. The results are shown in Table 1. In the adhesive film, the intermediate layer forms the resin layer A having a melting peak temperature of 135°C or higher, and the first adhesive layer and the second adhesive layer each form the adhesive layer P having a melting peak temperature of 100°C or lower.

### Comparative Example 1

An unstretched polypropylene film (CPP, homopolypropylene, melting peak temperature: 163°C and thickness: 50 µm) was used alone as an adhesive film, and evaluated in the same manner as in Example 1. The results are shown in Table 1.

### Comparative Example 2

Evaluation for unsealing in the case where an adhesive film was not used was performed in the same manner as in Example 1. The results are shown in Table 1.

### Comparative Example 3

Co-extrusion was performed so as to laminate three layers with polypropylene (PP, melting peak temperature: 140°C) on both sides of polypropylene (PP, homopolypropylene, melting peak temperature: 160°C), thereby preparing a laminated film in which a first polyolefin layer (a PP layer having a melting peak temperature of 140°C and a thickness of 6 µm), an intermediate layer (a PP layer having a melting peak temperature of 160°C and a thickness of 28 µm) and a second polyolefin layer (a PP layer having a melting peak temperature of 140°C and a thickness of 6 µm). The film was evaluated in the same manner as in Example 1. The results are shown in Table 1.

### Comparative Example 4

Co-extrusion was performed so as to laminate three layers with polypropylene (PP, melting peak temperature: 140°C) on both sides of polypropylene (PP, melting peak temperature: 133°C), thereby preparing a laminated film in which a first polyolefin layer (a PP layer having a melting peak temperature of 140°C and a thickness of 10 µm), an intermediate layer (a PP layer having a melting peak temperature of 133°C and a thickness of 20 µm) and a second polyolefin layer (a PP layer having a melting peak temperature of 140°C and a thickness of 10 µm). The film was evaluated in the same manner as in Example 1. The results are shown in Table 1.

**[Table 1]**

| Table 1 | Laminated configuration of adhesive film (melting peak temperature (°C), thickness (µm)) | Cross-sectional hardness of resin layer A at 110°C (N/mm2) | Evaluation for unsealing |
|---|---|---|---|
| Example 1 | PPa (120°C, 40 um)/DL (adhesive layer P, 93°C, 3 um)/PP (resin layer A, 163°C, 50 um)/DL (adhesive layer P, 93°C, 3 um)/PPa (140°C, 50 um) | 36 | A |
| Example 2 | PPa (120°C, 40 um)/DL (adhesive layer P, 93°C, 3 um)/PP (resin layer A, 163°C), 50 um/DL (adhesive layer P, 93°C, 3 um)/PPa (120°C, 40 um) | 35 | A |
| Example 3 | PPa (140°C, 50 um)/DL (adhesive layer P, 93°C, 3 um)/PP (resin layer A, 163°C, 50 um)/DL (adhesive layer P, 93°C, 3 um)/PPa (140°C, 50 um) | 40 | A |
| Comparative Example 1 | PP (163°C, 50 um) | 43 | C |
| Comparative Example 2 | No film | - | C |
| Comparative Example 3 | PP (140°C, 6 µm)/PP (160°C, 28 µm)/PP (140°C, 6 µm) | 40 | C |
| Comparative Example 4 | PP (140°C, 10 µm)/PP (133°C, 20 µm)/PP (140°C, 10 µm) | 14 | C |

As described above, the present disclosure provides inventions of aspects as described below.

Item 1. An adhesive film that is used for an electrical storage device,
the electrical storage device having a structure in which an electrical storage device element is housed in a packaging formed of an exterior material for electrical storage devices,
the exterior material for electrical storage devices including a laminate including at least a base material layer, a barrier layer, and a heat-sealable resin layer in the stated order from the outside,
the electrical storage device element being housed in the packaging by heat-sealing the heat-sealable resin layers of the exterior material for electrical storage devices,
the adhesive film being used by being interposed between the heat-sealable resin layers at a location where the heat-sealable resin layers are heat-sealed,
the adhesive film including at least a resin layer A and an adhesive layer P,
the resin layer A having a melting peak temperature of 135°C or higher,
the adhesive layer P having a melting peak temperature of 100°C or lower.

Item 2. The adhesive film according to item 1, in which the adhesive layer P is not an outermost layer of the adhesive film.

Item 3. The adhesive film according to item 1 or 2, in which the resin layer A is at least one of the outermost layers of the adhesive film.

Item 4. The adhesive film according to any one of items 1 to 3, in which the outermost layer of the adhesive film contains a polyolefin backbone.

Item 5. The adhesive film according to any one of items 1 to 4, in which a cross-sectional hardness of the resin layer A is 15 N/mm² or more as measured in an environment at a temperature of 110°C.

Item 6. The adhesive film according to any one of items 1 to 5, including a first polyolefin layer, an intermediate layer, and a second polyolefin layer in the stated order, and
a first adhesive layer between the first polyolefin layer and the intermediate layer, a second adhesive layer between the second polyolefin layer and the intermediate layer, or both the first adhesive layer and the second adhesive layer, in which
the intermediate layer forms the resin layer A, and
at least one of the first adhesive layer and the second adhesive layer forms the adhesive layer P.

Item 7. The adhesive film according to item 6, in which at least one of the first polyolefin layer and the second polyolefin layer contains an acid-modified polyolefin.

Item 8. The adhesive film according to item 6 or 7, in which each of the first adhesive layer and the second adhesive layer is a cured product of a resin composition containing an acid-modified polyolefin and a curing agent.

Item 9. A method for manufacturing an adhesive film that is used for an electrical storage device,
the electrical storage device having a structure in which an electrical storage device element is housed in a packaging formed of an exterior material for electrical storage devices,
the exterior material for electrical storage devices including a laminate including at least a base material layer, a barrier layer, and a heat-sealable resin layer in the stated order from the outside,
the electrical storage device element being housed in the packaging by heat-sealing the heat-sealable resin layers of the exterior material for electrical storage devices,
the adhesive film being used by being interposed between the heat-sealable resin layers at a location where the heat-sealable resin layers are heat-sealed,
the adhesive film including at least a resin layer A and an adhesive layer P,
the resin layer A having a melting peak temperature of 135°C or higher,
the adhesive layer P having a melting peak temperature of 100°C or lower.

Item 10. An electrical storage device having a structure in which an electrical storage device element is housed in a packaging formed of an exterior material for electrical storage devices, in which
the exterior material for electrical storage devices includes a laminate including at least a base material layer, a barrier layer, and a heat-sealable resin layer in the stated order from the outside,
the electrical storage device element is housed in the packaging by heat-sealing the heat-sealable resin layers of the exterior material for electrical storage devices, and
the adhesive film according to any one of items 1 to 8 is disposed so as to be interposed between the heat-sealable resin layers at a location where the heat-sealable resin layers are heat-sealed.

Item 11. The electrical storage device according to item 10, in which a melting peak temperature of the heat-sealable resin layer of the exterior material for electrical storage devices is 130°C or higher.

Item 12. The electrical storage device according to item 10 or 11, in which the melting peak temperature of the heat-sealable resin layer of the exterior material for electrical storage devices is higher than the melting peak temperature of at least one of the outermost layers of the adhesive film.

Item 13. An electrical storage device having a structure in which an electrical storage device element is housed in a packaging formed of an exterior material for electrical storage devices, in which
the exterior material for electrical storage devices includes a laminate including at least a base material layer, a barrier layer, and a heat-sealable resin layer in the stated order from the outside,
the electrical storage device element is housed in the packaging by heat-sealing the heat-sealable resin layers of the exterior material for electrical storage devices,
an adhesive film is disposed so as to be interposed between the heat-sealable resin layers at a location where the heat-sealable resin layers are heat-sealed, and
the electrical storage device is unsealed at the location of the adhesive layer of the adhesive film in an environment at a temperature of 100°C or higher and 130°C or lower.

Item 14. A method for manufacturing an electrical storage device having a structure in which an electrical storage device element is housed in a packaging formed of an exterior material for electrical storage devices, in which
the exterior material for electrical storage devices includes a laminate including at least a base material layer, a barrier layer, and a heat-sealable resin layer in the stated order from the outside,
the method including a housing step of housing the electrical storage device element in the packaging by disposing the adhesive film according to any one of items 1 to 8 so as to interpose the adhesive film between the heat-sealable resin layers of the exterior material for electrical storage devices at a location where the heat-sealable resin layers are heat-sealed, and heat-sealing the heat-sealable resin layers with the adhesive film interposed therebetween.

Item 15. A kit including an exterior material for electrical storage devices which is to be used for an electrical storage device, and the adhesive film according to any one of items 1 to 8,
the exterior material for electrical storage devices including a laminate including at least a base material layer, a barrier layer, and a heat-sealable resin layer in the stated order from the outside,
the kit being used with the electrical storage device element housed in the packaging by disposing the adhesive film so as to interpose the adhesive film between the heat-sealable resin layers of the exterior material for electrical storage devices at a location where the heat-sealable resin layers are heat-sealed, and heat-sealing the heat-sealable resin layers with the adhesive film interposed therebetween.

### DESCRIPTION OF REFERENCE SIGNS

1: Adhesive film
2: Metal terminal
3: Exterior material for electrical storage devices
3a: Peripheral edge portion of exterior material for electrical storage devices
4: Electrical storage device element
10: Electrical storage device
11: First polyolefin layer
12: Second polyolefin layer
13: Intermediate layer
21: First adhesive layer
22: Second adhesive layer
31: Base material layer
32: Adhesive agent layer
33: Barrier layer
34: Adhesive layer
35: Heat-sealable resin layer

## Claims

1. An adhesive film that is used for an electrical storage device,
the electrical storage device having a structure in which an electrical storage device element is housed in a packaging formed of an exterior material for electrical storage devices,
the exterior material for electrical storage devices including a laminate including at least a base material layer, a barrier layer, and a heat-sealable resin layer in the stated order from the outside,
the electrical storage device element being housed in the packaging by heat-sealing the heat-sealable resin layers of the exterior material for electrical storage devices,
the adhesive film being used by being interposed between the heat-sealable resin layers at a location where the heat-sealable resin layers are heat-sealed,
the adhesive film including at least a resin layer A and an adhesive layer P,
the resin layer A having a melting peak temperature of 135°C or higher,
the adhesive layer P having a melting peak temperature of 100°C or lower.

2. The adhesive film according to claim 1, wherein the adhesive layer P is not an outermost layer of the adhesive film.

3. The adhesive film according to claim 1 or 2, wherein the resin layer A is at least one of the outermost layers of the adhesive film.

4. The adhesive film according to claim 1 or 2, wherein the outermost layer of the adhesive film contains a polyolefin backbone.

5. The adhesive film according to claim 1 or 2, wherein a cross-sectional hardness of the resin layer A is 15 N/mm² or more as measured in an environment at a temperature of 110°C.

6. The adhesive film according to claim 1 or 2, comprising a first polyolefin layer, an intermediate layer, and a second polyolefin layer in the stated order, and
a first adhesive layer between the first polyolefin layer and the intermediate layer, a second adhesive layer between the second polyolefin layer and the intermediate layer, or both the first adhesive layer and the second adhesive layer, wherein
the intermediate layer forms the resin layer A, and
at least one of the first adhesive layer and the second adhesive layer forms the adhesive layer P.

7. The adhesive film according to claim 6, wherein at least one of the first polyolefin layer and the second polyolefin layer contains an acid-modified polyolefin.

8. The adhesive film according to claim 6, wherein each of the first adhesive layer and the second adhesive layer is a cured product of a resin composition containing an acid-modified polyolefin and a curing agent.

9. A method for manufacturing an adhesive film that is used for an electrical storage device,
the electrical storage device having a structure in which an electrical storage device element is housed in a packaging formed of an exterior material for electrical storage devices,
the exterior material for electrical storage devices including a laminate including at least a base material layer, a barrier layer, and a heat-sealable resin layer in the stated order from the outside,
the electrical storage device element being housed in the packaging by heat-sealing the heat-sealable resin layers of the exterior material for electrical storage devices,
the adhesive film being used by being interposed between the heat-sealable resin layers at a location where the heat-sealable resin layers are heat-sealed,
the adhesive film including at least a resin layer A and an adhesive layer P,
the resin layer A having a melting peak temperature of 135°C or higher,
the adhesive layer P having a melting peak temperature of 100°C or lower.

10. An electrical storage device having a structure in which an electrical storage device element is housed in a packaging formed of an exterior material for electrical storage devices, wherein
the exterior material for electrical storage devices includes a laminate including at least a base material layer, a barrier layer, and a heat-sealable resin layer in the stated order from the outside,
the electrical storage device element is housed in the packaging by heat-sealing the heat-sealable resin layers of the exterior material for electrical storage devices, and
the adhesive film according to claim 1 or 2 is disposed so as to be interposed between the heat-sealable resin layers at a location where the heat-sealable resin layers are heat-sealed.

11. The electrical storage device according to claim 10, wherein a melting peak temperature of the heat-sealable resin layer of the exterior material for electrical storage devices is 130°C or higher.

12. The electrical storage device according to claim 10, wherein the melting peak temperature of the heat-sealable resin layer of the exterior material for electrical storage devices is higher than the melting peak temperature of at least one of the outermost layers of the adhesive film.

13. An electrical storage device having a structure in which an electrical storage device element is housed in a packaging formed of an exterior material for electrical storage devices, wherein
the exterior material for electrical storage devices includes a laminate including at least a base material layer, a barrier layer, and a heat-sealable resin layer in the stated order from the outside,
the electrical storage device element is housed in the packaging by heat-sealing the heat-sealable resin layers of the exterior material for electrical storage devices,
an adhesive film is disposed so as to be interposed between the heat-sealable resin layers at a location where the heat-sealable resin layers are heat-sealed, and
the electrical storage device is unsealed at the location of the adhesive layer of the adhesive film in an environment at a temperature of 100°C or higher and 130°C or lower.

14. A method for manufacturing an electrical storage device having a structure in which an electrical storage device element is housed in a packaging formed of an exterior material for electrical storage devices,
the exterior material for electrical storage devices including a laminate including at least a base material layer, a barrier layer, and a heat-sealable resin layer in the stated order from the outside,
the method comprising a housing step of housing the electrical storage device element in the packaging by disposing the adhesive film according to claim 1 or 2 so as to interpose the adhesive film between the heat-sealable resin layers of the exterior material for electrical storage devices at a location where the heat-sealable resin layers are heat-sealed, and heat-sealing the heat-sealable resin layers with the adhesive film interposed therebetween.

15. A kit comprising an exterior material for electrical storage devices which is to be used for an electrical storage device, and the adhesive film according to claim 1 or 2,
the exterior material for electrical storage devices including a laminate including at least a base material layer, a barrier layer, and a heat-sealable resin layer in the stated order from the outside,
the kit being used with the electrical storage device element housed in the packaging by disposing the adhesive film so as to interpose the adhesive film between the heat-sealable resin layers of the exterior material for electrical storage devices at a location where the heat-sealable resin layers are heat-sealed, and heat-sealing the heat-sealable resin layers with the adhesive film interposed therebetween.
